# EUROPEAN PATENT APPLICATION

(11) **EP 4 583 544 A1**
(43) Date of publication of application: **09.07.2025**
(21) Application number: 22957013.0
(22) Date of filing: 02.09.2022
(51) Int. Cl.: H04W 4/029

(54) **POSITIONING METHOD AND APPARATUS, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); HE, Chuanfeng, Dongguan, Guangdong 523860 (CN); XU, Weijie, Dongguan, Guangdong 523860 (CN)
(74) Representative: Taor, Simon Edward William
(86) International application number: PCT/CN2022/116880
(87) International publication number: WO 2024/045194

(57) **Abstract**

Embodiments of the present application provide a positioning method and apparatus, and a communication device. The method comprises: a first device receives a first signal sent by an anchor device, the first signal being a back scattering signal corresponding to a second signal received by the anchor device; and the first device positions a second device on the basis of the received first signal.

## Description

### TECHNICAL FIELD

Embodiments of the present disclosure relate to the field of back scattering communication technology, and in particular to a method and an apparatus for positioning based on back scattering, and a communication device.

### BACKGROUND

The zero-power device has the characteristics of low complexity and low cost, and can achieve high-density and large-scale deployment with low cost. When deploying the zero-power device, the zero-power device can be used as a positioning anchor (i.e., anchor device) to assist positioning and improve positioning accuracy. How to achieve positioning through the anchor device is a problem that needs to be solved.

### SUMMARY

Embodiments of the present disclosure provide a method and an apparatus for positioning, a communication device, a chip, a computer readable storage medium, a computer program product, and a computer program.

A method for positioning provided by an embodiment of the present disclosure includes the following operations.

The first device receives the first signal transmitted by an anchor device. The first signal is a back scattering signal corresponding to the second signal received by the anchor device.

The first device positions the second device based on the received first signal.

A method for positioning provided by an embodiment of the present disclosure includes the following operation.

An anchor device transmits the first signal to the first device. The first signal is a back scattering signal corresponding to the second signal received by the anchor device. The first signal is used by the first device to position the second device.

An apparatus for positioning provided by an embodiment of the present disclosure is applied to the first device. The apparatus includes a receiving unit and a positioning unit.

The receiving unit is configured to receive the first signal transmitted by an anchor device. The first signal is a back scattering signal corresponding to the second signal received by the anchor device.

The positioning unit is configured to position the second device based on the received first signal.

An apparatus for positioning provided by an embodiment of the present disclosure is applied to an anchor device. The apparatus includes a transmitting unit.

The transmitting unit is configured to transmit the first signal to the first device. The first signal is a back scattering signal corresponding to the second signal received by the anchor device. The first signal is used by the first device to position the second device.

A communication device provided by an embodiment of the present disclosure includes a processor and a memory. The memory is configured to store a computer program, and the processor is configured to invoke and execute the computer program stored in the memory to perform the above methods for positioning.

A chip provided by an embodiment of the present disclosure is used for implementing the above methods for positioning.

Specifically, the chip includes a processor configured to invoke and execute a computer program from a memory to cause a device on which the chip is mounted to perform the above methods for positioning.

A computer readable storage medium provided by an embodiment of the present disclosure is used for storing a computer program that causes a computer to perform the above methods for positioning.

A computer program product provided by an embodiment of the present disclosure includes computer program instructions that cause a computer to perform the above methods for positioning.

A computer program provided by an embodiment of the present disclosure causes the computer to perform the above methods for positioning when the computer program is executed on the computer.

According to the above technical solutions, after receiving the second signal, the anchor device performs back scattering to transmit the first signal. The first signal is a back scattering signal transmitted by the anchor device in response to the second signal. The first device receives the first signal transmitted by the anchor device, and positions the second device based on the received first signal. Thus, by means of back scattering of the anchor device, the positioning of the second device is achieved by using the anchor device to assist the first device.

### BRIEF DESCRIPTION OF THE DRAWINGS

The accompanying drawings described herein are intended to provide a further understanding of the present disclosure, and constitute a part of the present disclosure. The schematic embodiments of the present disclosure and the description thereof are intended to explain the present disclosure, and do not constitute an undue limitation of the present disclosure.
FIG. 1 is a schematic diagram of zero-power communication provided by an embodiment of the present disclosure.
FIG. 2 is a schematic diagram of back scattering communication provided by an embodiment of the present disclosure.
FIG. 3 is a schematic diagram of power harvesting provided by an embodiment of the present disclosure.
FIG. 4 is a schematic diagram of a circuit of resistance load modulation provided by an embodiment of the present disclosure.
FIG. 5 is a flowchart of a method for positioning provided by an embodiment of the present disclosure.
FIG. 6 is the first schematic diagram of a system for positioning provided by an embodiment of the present disclosure.
FIG. 7 is the first schematic diagram of flows for positioning provided by an embodiment of the present disclosure.
FIG. 8 is the second schematic diagram of a system for positioning provided by an embodiment of the present disclosure.
FIG. 9 is the second schematic diagram of flows for positioning provided by an embodiment of the present disclosure.
FIG. 10 is the third schematic diagram of a system for positioning provided by an embodiment of the present disclosure.
FIG. 11 is the third schematic diagram of flows for positioning provided by an embodiment of the present disclosure.
FIG. 12 is the fourth schematic diagram of a system for positioning provided by an embodiment of the present disclosure.
FIG. 13 is the fourth schematic diagram of flows for positioning provided by an embodiment of the present disclosure.
FIG. 14 is the first schematic diagram of a structural composition of an apparatus for positioning provided by an embodiment of the present disclosure.
FIG. 15 is the second schematic diagram of a structural composition of an apparatus for positioning provided by an embodiment of the present disclosure.
FIG. 16 is a schematic diagram of a structure of a communication device provided by an embodiment of the present disclosure.
FIG. 17 is a schematic diagram of a structure of a chip provided by an embodiment of the present disclosure.
FIG. 18 is a schematic block diagram of a communication system provided by an embodiment of the present disclosure.

### DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, but not all of the embodiments. Based on the embodiments in the present disclosure, all other embodiments obtained by those skilled in the art without creative work fall within the scope of protection of the present disclosure.

### Communication based on zero-power device

In recent years, zero-power device have been used more and more widely. A kind of typical zero-power device is a Radio Frequency Identification (RFID) device.

The RFID device is a kind of device based on RFID technology. The RFID technology is a wireless communication technology. This technology uses the spatial coupling of radio frequency signals to realize contactless automatic transmission and identification of tag information. A kind of typical RFID device is an RFID tag, which is also called "radio frequency tag" or "electronic tag". The types of electronic tags divided according to different power supply modes may be divided into active electronic tags, inactive electronic tags and semi-inactive electronic tags. The active electronic tag is also called the voluntary electronic tag, which means that the power of working of the electronic tag is provided by the battery. The battery, memory and antenna together form the active electronic tag, which is different from the activation mode of passive radio frequency. Information is always sent through the set band before the battery is replaced. The inactive electronic tag is also called the passive electronic tag, which does not support the built-in battery. When the inactive electronic tag approaches the reader/writer, the electronic tag is in the near field range formed by the radiation of the reader/writer antenna. The antenna of the electronic tag generates an induced current through electromagnetic induction. The induced current drives the circuit of the chip of the electronic tag. The circuit of the chip transmits the identification information stored in the electronic tag to the reader/writer through the antenna of the electronic tag. The semi-active electronic tag inherits the advantages of passive electronic tag such as small size, light weight, low price and long service life. When there is no reader/writer to access, the built-in battery only supplies power to a few circuits in the chip. Only when the reader/writer accesses, the built-in battery supplies power to the RFID chip to increase the reading- writing distance of the tag and improve the reliability of communication.

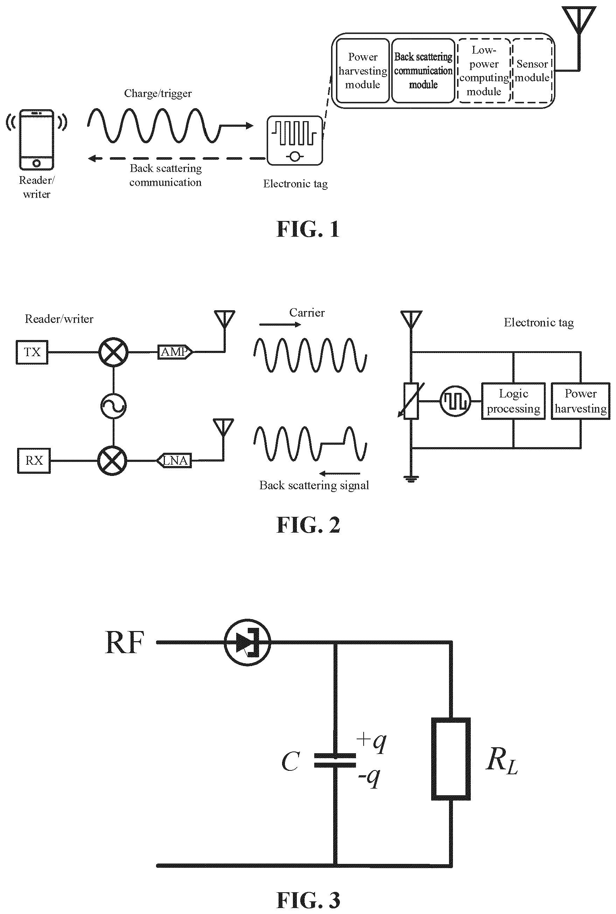

RFID system consists of two parts: electronic tag and reader/writer. The electronic tag is composed of coupled components and a chip, and each electronic tag has unique electronic code. The electronic tag may be placed on the detected target object to achieve the purpose of marking the target object. The reader/writer may not only read the information on the electronic tag, but also write information in the electronic tag, and simultaneously provide the electronic tag with the power needed for communication. As illustrated in FIG. 1, after the electronic tag (which may be an inactive electronic tag or a passive electronic tag) enters the electromagnetic field, it receives the radio frequency signal transmitted by the reader/writer. The electronic tag transmits the information stored in the electronic tag by using the power obtained by the electromagnetic field generated in space, and the reader/writer reads the information of the electronic tag and decodes the information to identify the electronic tag.

The communication based on zero-power device is referred to as zero-power communication for short. The key technologies of zero-power communication include power harvesting, back scattering communication and low-power computing. As illustrated in FIG. 1, the RFID system is a typical zero-power communication system, which includes an electronic tag and a reader/writer. The electronic tag is the zero-power device. The reader/writer emits radio waves that are used to provide power to the electronic tag. The power harvesting module installed in the electronic tag may harvest the power (the radio waves emitted by the reader/writer illustrated in FIG. 1) carried by radio waves in space and use it for the low-power computing module of the electronic tag and achieving the back scattering communication. After the electronic tag obtains power, it may receive the control command of the reader/writer and transmit data to the reader/writer through the manner of back scattering communication based on the control signaling. The data transmitted by the electronic tag may come from the data stored by the electronic tag itself (such as the identity of the electronic tag or the information written in advance in the electronic tag, such as the production date, brand, manufacturer, etc. of the commodity). The electronic tag may also load with various sensors, so as to report the data collected by various sensors based on the mechanism of zero-power communication.

The key technologies of zero-power communication are further explained below.

### 1) Back scattering communication (Back Scattering)

FIG. 2 is a schematic diagram of back scattering communication. As illustrated in FIG. 2, the reader/writer may also be called a back scattering reader/writer, and the electronic tag may also be called a back scattering tag. The electronic tag is a zero-power device. The electronic tag receives the carrier signal transmitted by the reader/writer, harvests power through the power harvesting module, then supplies power to the low-power computing module (i.e., the logic processing module in FIG. 2), modulates the incoming signal through the low-power computing module, and performs back scattering on the modulated signal.

The main features of back scattering communication are as follows.

On the one hand, the zero-power device does not actively transmit signals and achieves back scattering communication by modulating incoming signal.

On the other hand, the zero-power device does not rely on the traditional active power amplifier transmitter and uses the low-power computing module, which greatly reduces hardware complexity.

In another aspect, the zero-power device is combined with the power harvesting module, which may achieve battery-free communication.

### 2)Power Harvesting

FIG. 3 is a schematic diagram of power harvesting. As illustrated in FIG. 3, the zero-power device uses a radio frequency (RF) module to harvest power of space electromagnetic waves through electromagnetic induction, thereby driving load circuits (such as driving low-power computing module, sensor module, etc.), and achieving battery-free communication.

### 3) Load modulation

Load modulation is a method often used by the electronic tag to transmit data to reader/writer. Load modulation completes the modulation process by adjusting the electrical parameters of the oscillation circuit of the electronic tag according to the beat of the data stream to cause size of and phase of the impedance of the electronic tag to be changed accordingly. Load modulation technology mainly includes resistance load modulation and capacitance load modulation.

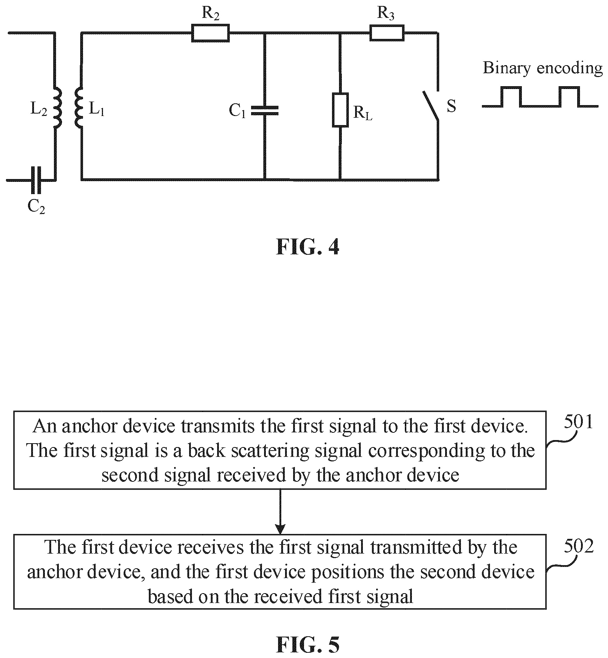

In the resistance load modulation, the load is connected in parallel with a resistor, which is called a load modulation resistor. The resistor is connected and disconnected according to the clock of the data stream, and the on-off of the switch S is controlled by binary data encoding. The schematic diagram of the circuit of resistance load modulation is illustrated in FIG. 4.

In capacitance load modulation, the load is connected in parallel with a capacitor, which is called a load modulation capacitor. The capacitor replaces the load modulation resistor controlled by binary data encoding in FIG. 4.

### 4) Coding

The data transmitted by the electronic tag may use different forms of codes to represent binary "1" and "0". The RFID system typically uses one of the following encoding methods: non-return-to-zero (NRZ) inverted coding, Manchester coding, Unipolar return-to-zero (Unipolar RZ) coding, differential bi-phase (DBP) coding, Miller coding, and differential coding. Different forms of codes being used to represent binary "1" and "0" may be understood to be that different pulse signals are used to represent 0 and 1.

Power supply signal and trigger signal in zero-power communication system

### 1) Power supply signal

The power supply signal is used to supply power to the zero-power device.

In terms of the carrier of the power supply signal, the transmitting end of the power supply signal may be a base station, an intelligent gateway, a charging station, a micro base station, a smartphone, etc.

In terms of the band of the power supply signal, the band of the radio wave used as the power supply signal may be a low frequency, an intermediate frequency, a high frequency, or the like.

In terms of the waveform of the power supply signal, the waveform of the radio wave used as the power supply signal may be a sine wave, a square wave, a triangular wave, a pulse, a rectangular wave, or the like.

In addition, the power supply signal may be a continuous wave or a discontinuous wave (that is, interruption in a certain period is allowed).

The power supply signal may be, but is not limited to, a physical signal specified in the 3GPP standard, such as a Sounding Reference Signal (SRS), a Physical Uplink Shared Channel (PUSCH), a Physical Random Access Channel (PRACH), a Physical Uplink Control Channel (PUCCH), a Physical Downlink Control Channel (PDCCH), and a Physical Downlink Shared Channel (PDSCH). Physical Broadcast Channel (PBCH), and the like. The power supply signal is not limited thereto, and the power supply signal may be a new signal.

### 2) Trigger signal

The trigger signal is used to trigger the zero-power device to communicate. In other words, the trigger signal is used to schedule the zero-power device.

In terms of the carrier of the trigger signal, the transmitting end of the trigger signal may be a base station, an intelligent gateway, a charging station, a micro base station, a smart phone, or the like.

In terms of the band of the trigger signal, the band of the radio wave used as the trigger signal may be a low frequency, an intermediate frequency, a high frequency, or the like.

In terms of the waveform of the trigger signal, the waveform of the radio wave used as the trigger signal may be a sine wave, a square wave, a triangular wave, a pulse, a rectangular wave, or the like.

In addition, the trigger signal may be a continuous wave or a discontinuous wave (that is, interruption in a certain period is allowed).

The trigger signal may be, but is not limited to, a certain physical signal specified in the 3GPP standard, such as a SRS, a PUSCH, a PRACH, a PUCCH, a PDCCH, a PDSCH, a PBCH, and the like. The trigger signal is not limited thereto, and the trigger signal may be a new signal.

### Cellular Internet of Things (IOT)

In the cellular IoT, the terminal is active, and the terminal needs to monitor the scheduling information of the network device and communicates based on the scheduling information of the network device. For scheduling-free uplink transmission, the terminal may communicate on a preset resource.

As applications in the 5G industry increase, there are more and more types and application scenarios of connectors, and there will also be higher requirements for the price and power consumption of the terminal. The application of battery-free, low-cost terminals (i.e., passive IoT devices) has become the key technology of cellular Internet of Things.

The passive IoT device may be implemented based on the zero-power device, such as the RFID device, and may be extended on the basis of the zero-power device to be suitable for the cellular IoT. The cellular IoT that introduces the passive IoT device may also be called the cellular passive IoT. In the cellular passive IoT, the passive IoT device may communicate by monitoring scheduling information of a network device. Different from the active device, the passive IoT device is passive, so before communicating, the passive IoT device needs to perform power harvesting, that is, charging, and then performs communication.

### Classification of zero-power device

Based on the power source and usage mode of the zero-power device, the types of the zero-power device include passive zero-power device, semi-passive zero-power device and active zero-power device.

### 1) Passive zero-power device

The zero-power device does not need a built-in battery. When the zero-power device approaches the network device, the zero-power device is in the range of near field formed by the radiation of the antenna of the network device. Therefore, the antenna of the zero-power device generates induced current through electromagnetic induction, and the induced current drives the low-power computing module (that is, the low-power chip circuit) of the zero-power device to work, so as to achieve the demodulation of the forward link signal and the modulation of the backward link signal. For the back scattering link, the zero-power device uses back scattering to transmit signals.

It may be seen that the passive zero-power device does not need a built-in battery to drive the forward link or backward link, and it is a true zero-power device.

Since the passive zero-power device does not need battery, the RF circuit and baseband circuit of the passive zero-power device are very simple, for example, low-noise amplifier (LNA), power amplifier (PA), crystal oscillator, ADC, and the like, are not needed. Therefore, it has many advantages such as small size, light weight, low price and long service life, etc.

### 2) Semi-passive zero-power device

The semi-passive zero-power device itself is not equipped with a conventional battery, but it can use an power harvesting module to harvest radio wave power and store the harvested power in an power storage unit (such as a capacitor). After the power is obtained by the power storage unit, the low-power computing module (that is, the low-power chip circuit) of the zero-power device can be driven to work, so as to achieve the demodulation of the forward link signal, the modulation of the backward link signal, etc. For the back scattering link, the zero-power device uses back scattering to transmit signals.

It may be seen that the semi-passive zero-power device does not need a built-in battery to drive neither the forward link nor the backward link. Although the power stored by the capacitor is used in operation, the power comes from the power of radio waves harvested by the power harvesting module. Therefore, the semi-passive zero-power device is a true zero-power device.

The semi-passive zero-power device inherits many advantages of passive zero-power device, such as small size, light weight, low price and long service life.

### 3) Active zero-power device

A zero-power device used in some scenarios may also be the active zero-power device, which can have built-in battery. The battery is used to drive the low-power computing module (that is, the low-power chip circuit) of the zero-power device to work, so as to achieve the demodulation of the forward link signal and the modulation of the backward link signal. However, for the back scattering link, the zero-power device uses back scattering to transmit signal. Therefore, the zero-power of this type of device is mainly reflected in the fact that the signal transmission of the backward link does not need the power of the device itself, but back scattering is used.

The built-in battery of the active zero-power device supplies power to RF chip to increase communication distance and improve communication reliability. Therefore, it can be applied in some scenarios in which the requirements for communication distance and communication delay are relatively high.

### Indoor positioning technology

In outdoor environments, thanks to the Global Positioning System (GPS), the positioning for the terminal has high accuracy. However, in an indoor environment or an environment with deep shadow effect, satellite signals are often interrupted, and satellite positioning (i.e. GPS-based positioning) is very problematic.

When satellite positioning cannot be used in the indoor environment, indoor positioning technology is used as an auxiliary positioning of satellite positioning to position the current position of the object and to solve the problem that satellite signals are weak when they reach the ground and cannot penetrate buildings. The indoor positioning refers to achieving positioning in indoor environment. Wireless communication, base station positioning, inertial navigation positioning and other technologies are mainly used to integrate to form an indoor position positioning system, so as to achieve the position monitoring of people and objects in indoor space.

The zero-power device has the characteristics of low complexity, low cost, maintenance-free and battery-free, can support power harvesting and back scattering communication, and can achieve high-density and large-scale deployment with low cost. When deploying the zero-power device, the zero-power device can be used as a positioning anchor (i.e., anchor device) to assist positioning, improve positioning accuracy, and finally achieve the positioning for target devices, such as, the positioning for goods in logistics scenarios, the positioning for animals in farms of animal husbandry, the positioning for individual users and items, and the positioning in indoor environments such as shopping malls.

How to achieve positioning for the target device through the anchor device is a problem that needs to be solved. Especially when there are many devices in the positioning system and there are many wireless signals in the space, how to avoid the influence of non-target devices and achieve the accurate positioning for target devices is a problem that needs to be solved. Therefore, the following technical solutions according to the embodiments of the present disclosure are proposed.

It should be noted that the "anchor device" in the embodiments of the present disclosure may also be called a reference device, and the name of the anchor device is not limited in the present disclosure. The "anchor device" supports back scattering communication, and the position (or coordinates) of the anchor device is known. As an example, the anchor device may be a zero-power device. The zero-power device supports back scattering communication, and the type of the zero-power device may be a passive zero-power device, a semi-passive zero-power device, or an active zero-power device, which is not limited in the present disclosure. The zero-power device is a device whose position is known, for example, the zero-power device is fixed and its position is known to the positioning device, or the zero-power device is movable and the zero-power device can report its position to the positioning device, or the zero-power device is movable and the positioning device may update/write position information to the zero-power device.

It should be noted that the "anchor device" in the embodiments of the present disclosure may also be called a reference device, and the name of the anchor device is not limited in the present disclosure.

It should be noted that the "first device" in the embodiments of the present disclosure may be called a positioning device, and the "second device" may be called a "target device". When the positioning device needs to position the target device, the positioning device achieves the positioning for the second device through the assistance of the anchor device. In some embodiments, the first device is a network device, and the second device is a terminal. The network device achieves positioning for the terminal through the assistance of the anchor device. In another embodiment, the first device is the first terminal, and the second device is the second terminal. The first terminal achieves positioning for the second terminal through the assistance of the anchor device. In another embodiment, the first device is a terminal, and the second device is a network device. The terminal achieves positioning for the network device through the assistance of the anchor device.

The network device may be an Evolutional Node B (eNB or eNodeB) in a Long Term Evolution (LTE) system, a Next Generation Radio Access Network (NG RAN) device, a base station (gNB) in an NR system, a wireless controller in a Cloud Radio Access Network (CRAN), a relay station, an access point, an vehicle-mounted device, a wearable device, a hub, a switch, a bridge, a router, or a network device in a future evolved Public Land Mobile Network (PLMN), etc.

The terminal may be any terminal, including but not limited to a terminal that uses a wired or wireless connection to a network device or other terminal. For example, the terminal may refer to an access terminal, a User Equipment (UE), a subscriber unit, a subscriber station, a mobile station, a mobile stage, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal in a 5G network or a terminal in a future evolution network, or the like.

The method for positioning provided by the embodiments of the present disclosure is a method for positioning based on the assistance of an anchor device, or a method for positioning based on back scattering.

In order to facilitate understanding of the technical solutions of the embodiments of the present disclosure, the technical solutions of the present disclosure will be described in detail below with reference to specific examples. The above related technologies can be arbitrarily combined with the technical solutions of the embodiments of the present disclosure as optional solutions, and all of them belong to the scope of protection of the embodiments of the present disclosure. Embodiments of the present disclosure include at least some of the following contents.

FIG. 5 is a flowchart of a method for positioning provided by an embodiment of the present disclosure. As illustrated in FIG. 5, the method for positioning includes the following operations.

In operation 501, an anchor device transmits the first signal to the first device. The first signal is a back scattering signal corresponding to the second signal received by the anchor device.

In operation 502, the first device receives the first signal transmitted by the anchor device, and the first device positions the second device based on the received first signal.

In some embodiments, before the operation 501, the first device receives the second positioning request signal transmitted by the second device. The second positioning request signal is used for requesting to acquire position information of the second device.

In some embodiments, after the operation 502, the first device transmits the positioning result of the second device to the second device.

Here, the anchor device responds to the received second signal to transmit the first signal. The second signal may be understood as an incoming signal related to the assistant positioning received by the anchor device. The first signal may be understood as a back scattering signal transmitted by the anchor device after receiving the second signal. For example, the anchor device may perform back scattering based on the second signal or perform back scattering based on other carrier signals after receiving the second signal.

In the embodiments of the present disclosure, the anchor device responds to the received second signal to transmit the first signal, which may be implemented by, but not limited to following two manners.

In the first manner, after receiving the second signal, the anchor device performs back scattering on the received second signal to transmit the first signal.

In some embodiments, after the anchor device receiving the second signal, if the reception power of the second signal is greater than or equal to the power threshold, the anchor device performs back scattering on the received second signal to transmit the first signal. When the power of the second signal reaching the anchor device is too low, the anchor device cannot support back scattering communication (for example, the anchor device cannot perform power harvesting on the second signal to provide the power required for back scattering, or the power of the second signal is less than the receiver sensitivity of the anchor device, and the reception of the second signal cannot be completed).

In some embodiments, the second signal carries information for indicating a transmission power of the second signal, and the information may be carried in the second signal through a transmitting end of the second signal. After receiving the second signal, the anchor device performs back scattering on the second signal to transmit the first signal. Here, since the first signal is a signal formed by performing back scattering on the second signal, the first signal also carries information for indicating the transmission power of the second signal. The transmission power of the second signal may be used for assisting the first device in determining the position of the second device.

In the second manner, after receiving the second signal, the anchor device performs back scattering on the third-party signal provided by the third-party device to transmit the first signal. Here, the distance between the third-party device and the anchor device is relatively close (for example, the distance is less than or equal to a distance threshold), and the position of the third-party device and the position of the anchor device may be considered to be the same. In the specific embodiment, the third-party device may be combined with the anchor device (i.e., the third-party device is a part of the anchor device) or the third-party device may be separate from the anchor device (i.e., the third-party device is not a part of the anchor device).

In some embodiments, after receiving the second signal, the anchor device performs back scattering on the third-party signal provided by the third-party device to transmit the first signal. In some embodiments, the anchor device may modulate/load corresponding information when performing back scattering communication, according to the signal strength of the second signal when receiving the second signal. That is, the characteristic information (such as signal strength) when the anchor device receives the second signal is carried in first signal. On the one hand, after receiving the second signal, the anchor device performs back scattering on the third-party signal. Since the transmission power of the third-party signal is determined based on the transmission power of the third-party device, the magnitude of the transmission power may be set to be great, so that since the anchor device performs back scattering on the third-party signal provided by the third-party device instead of directly performing back scattering on the second signal, even if the signal strength of the second signal reaching the anchor device is weak, the back-scattered first signal can be received by the first device. On the other hand, the back-scattered first signal carries strength information of the second signal, so that the first device can position the second device based on the information carried in the received first signal.

In some embodiments, the second signal carries information for indicating a transmission power of the second signal, and the information may be carried in the second signal through a transmitting end of the second signal. In some embodiments, after receiving the second signal by the anchor device, the information for indicating the transmission power of the second signal is modulated in the back scattering signal by the anchor device. That is, the transmission power information of the second signal is carried in the back scattering signal (the first signal). Here, the transmission power of the second signal may be used to assist the first device in determining the position of the second device.

In the embodiments of the present disclosure, the number of "anchor devices" may be one or more. When there are multiple anchor devices, each anchor device of the multiple anchor devices responds to the received second signal to transmit the first signal. The first device receives first signals transmitted by the multiple anchor devices, and positions the second device based on the received first signals transmitted by the multiple anchor devices. Here, different anchor devices may use the same or different frequencies when performing back scattering communication (i.e., transmitting the first signal).

In some embodiments, when performing back scattering, the anchor devices may carry indication information associated with the anchor devices, so that when the first device receives multiple back scattering signals, the back scattering signals may be corresponded to the anchor devices.

In some embodiments, the second signal is a signal satisfying the first condition. The first condition is a condition related to positioning of the second device. That is, the anchor device only responds to signals that satisfy the first condition.

Here, in the positioning system, the first device focuses on the second device, that is, the first device needs to position the second device. If in the positioning system, multiple signals reach the anchor device (the multiple signals may overlap in the time domain and/or frequency domain and/or code domain), and different signals in the multiple signals may come from multiple different devices, then the first device expects that the anchor device responds only to the signal related to the second device (i.e., the second signal), that is, the anchor device responses to the signal satisfying the first condition, so that the positioning of the second device can be achieved.

Alternatively, if in the positioning system, multiple signals reach the anchor device (the multiple signals may overlap in the time domain and/or frequency domain and/or code domain), different signals in the multiple signals may come from multiple different devices. The anchor device may carry characteristics of the second signals when performing back scattering (for example, identifications of the terminals transmitting the second signals), and the first device may position multiple target devices based on the back scattering signals of the anchor device.

Hereinafter, specific implementations of the first condition in the above solution will be described.

### First solution

In some embodiments, the first condition is determined based on the first control signal transmitted by the first device.

The first device transmits the first control signal to the anchor device. The anchor device receives the first control signal transmitted by the first device. The first control signal is used for scheduling the anchor device to perform back scattering communication and/or the first control signal is used for indicating the first condition.

Here, the first device schedules (may also be referred to as controlling) the anchor device through the first control signal. The first control signal carries scheduling information. The scheduling information is used for indicating the first condition.

In some embodiments, the first condition includes at least one of the first sub-condition and the second sub-condition.

The first sub-condition is that the reception time of the signal is at a specified time window.

The second sub-condition is that the signal has a specified signal characteristic. The specified signal characteristic includes at least one of the following: the signal carrying specified information, the signal being transmitted through a specified transmission resource, and the strength of the signal satisfying a specified strength range.

For example, the scheduling information carried by the first control signal includes a time window configuration. The time window configuration includes at least one piece of the following information: a period of the time window, a start time of the time window, an end time of the time window, and a length of the time window. After the anchor device receives the signal(s), if the reception time(s) of the signal(s) is at a specified time window (that is, the signal is a signal satisfying the first condition), the anchor device responds to the signal(s). Here, the specified time window is a time window for the anchor device to perform back scattering communication, and within this time window, the anchor device will respond to the received signal(s). Accordingly, the first device also schedules the transmitting end of the signal to transmit the signal at a specific time, so that the time at which the signal reaches the anchor device falls within the specified time window.

For example, the scheduling information carried by the first control signal includes the first indication information. The first indication information is used for instructing to respond to a signal carrying specified information. Here, the signal carrying specified information may be that the signal using dedicated sequence and/or the signal carrying specified identification and/or the signal using dedicated preamble, etc. After receiving the signal, the anchor device responds to the signal if the signal carries specified information (that is, the signal is a signal satisfying the first condition).

For example, the scheduling information carried by the first control signal includes the second indication information. The second indication information is used for instructing to respond to a signal transmitted through a specified transmission resource. Here, the specified transmission resource may be a specified time domain resource and/or a specified frequency domain resource and/or a specified code domain resource, etc. After receiving the signal, the anchor device responds to the signal if the signal is transmitted through the specified transmission resource (that is, the signal is a signal satisfying the first condition).

For example, the scheduling information carried by the first control signal includes the third indication information. The third indication information is used for instructing to respond to a signal satisfying a specified strength range. Here, the specified strength range may be defined by one or more strength thresholds, for example, the specified strength range is a strength range greater than or equal to the strength threshold(s). After receiving the signal, the anchor device responds to the signal if the strength of the signal satisfies the specified strength range (that is, the signal is a signal satisfying the first condition).

### Second solution

In some embodiments, the first condition is determined based on predefined information.

In some embodiments, the first condition includes at least one of the first sub-condition and the second sub-condition.

The first sub-condition is that reception time of the signal is at a specified time window.

The second sub-condition is that the signal has a specified signal characteristic. The specified signal characteristic includes at least one of the following: the signal carrying specified information, the signal being transmitted through a specified transmission resource, and the strength of the signal satisfying a specified strength range.

Hereinafter, specific implementations of the second signal in the above solutions will be described.

### Solution A

In some embodiments, the second signal is a signal transmitted by the second device.

The second device transmits the second signal, and the anchor device responds to the received second signal to transmit the first signal. The first device receives the first signal transmitted by the anchor device. In some implementations, after receiving the second signal, the anchor device performs back scattering on the second signal to transmit the first signal. In another implementation, after receiving the second signal, the anchor device performs back scattering on the third-party signal provided by the third-party device to transmit the first signal.

Option 1), in some embodiments, the second signal is a signal transmitted by the second device based on the scheduling of the second control signal.

Specifically, the first device transmits the second control signal to the second device. The second control signal is used for scheduling the second device to transmit the second signal. The second device transmits the second signal based on the scheduling of the second control signal.

In some embodiments, the second control signal includes at least one of the first information and the second information.

The first information is used for instructing the second device to transmit the second signal at a specified time.

The second information is used for instructing the second device to transmit the second signal having a specified signal characteristic. The specified signal characteristic includes at least one of the following: the signal carrying specified information, the signal being transmitted through a specified transmission resource, and the strength of the signal satisfying a specified strength range. Alternatively, the transmission resource includes at least one of a time domain resource, a frequency domain resource, and a code domain resource.

Here, the time indicated by the first information needs to be adapted to the first sub-condition in the above solution, that is, the first device schedules the second device to transmit the second signal at a specific time so that the time at which the second signal reaches the anchor device falls within the specified time window.

Here, the signal characteristic indicated by the second information needs to be adapted to the second sub-condition in the above solution, that is, the second signal transmitted by the second device scheduled by the first device has the specified signal characteristic, and the anchor device responds to the signal having the specified signal characteristic.

Option 2), in some embodiments, the second signal is a signal autonomously transmitted by the second device.

As an implementation, the second signal is the first positioning request signal. The first positioning request signal is used for requesting to acquire position information of the second device.

As an implementation, the second signal carries a dedicated preamble and/or a dedicated sequence.

In the above solution A, for the first device positioning the second device based on the received first signal, the following implementations may be used.

Mode A-1), the first device positions the second device only based on the received first signal.

In some embodiments, the first device determines a position of the anchor device corresponding to the first signal based on the received first signal. The first device determines the position of the second device based on the position of the anchor device and at least one of the following information: a transmission power of the second signal, a reception power of the second signal, a phase of the second signal, a reception power of the first signal, a transmission power of the first signal, a phase of the first signal, and a back scattering communication loss of the anchor device.

It should be noted that the reception power of the second signal refers to the power of the second signal when the anchor device receives the second signal. The reception power of the first signal refers to the power of the first signal when the first device receives the first signal.

Here, the transmission power of the second signal may be preset or scheduled by the first device to the second device, and the first device may naturally be aware of the transmission power of the second signal. Alternatively, information indicating the transmission power of the second signal is carried in the second signal, and the information may be carried in the second signal through the transmitting end of the second signal. The anchor device modulates/loads the information in the back scattering signal (that is, the first signal) after receiving the second signal. The transmission power of the second signal may be determined by the first device after receiving the back scattering signal (that is, the first signal).

Here, information indicating the reception power and/or phase of the second signal may be carried in the first signal, and the information is carried in the first signal through the receiving end of the second signal. The reception power and/or phase of the second signal may be determined by the first device after receiving the first signal.

Here, the reception power and/or phase of the first signal may be determined by the first device after receiving the first signal.

Here, in some embodiments, the anchor device performs back scattering on the second signal to transmit the first signal. In this case, the transmission power of the first signal is uncovered to the anchor device, and the transmission power of the first signal may be determined by the first device according to the position of the anchor device and the reception power and/or phase of the first signal. In some embodiments, the anchor device performs back scattering on the third-party signal to transmit the first signal. In this case, the transmission power of the first signal is determined based on the transmission power of the third-party signal, the transmission power of the first signal is known to the anchor device, the anchor device carries information indicating the transmission power of the first signal in the first signal, and the transmission power of the first signal may be determined by the first device after receiving the first signal.

Here, the back scattering communication loss of the anchor device may be preset in the first device or may also be reported to the first device by the anchor device.

Here, the first device determines the position of the anchor device corresponding to the first signal based on the signal characteristic of the received first signal. In some embodiments, the signal characteristic of the first signal includes at least one of: characteristic of information carried by the first signal, characteristic of a transmission direction of the first signal, and characteristic of a transmission resource of the first signal. The first signal carries at least one of the following information: an identification of the anchor device, an identification of the second device, an identification of the first device, fifth information, sixth information, seventh information, and eighth information. The fifth information is obtained by calculating based on the identification of the anchor device and the identification of the second device. The sixth information is obtained by calculating based on the identification of the anchor device and the identification of the first device. The seventh information is obtained by calculating based on the identification of the second device and the identification of the first device. The eighth information is obtained by calculating based on the identification of the anchor device, the identification of the second device, and the identification of the first device.

As an example, the first signal carries an identification of the anchor device.

As an example, the first signal carries an identification of the anchor device and at least one of the following information: an identification of the second device, and an identification of the first device.

As an example, the first signal carries at least one of fifth information, sixth information, seventh information, and eighth information.

As an example, the first signal carries an identification of the anchor device and at least one of the following information: fifth information, sixth information, seventh information, and eighth information.

Here, the fifth information, the sixth information, the seventh information, and the eighth information are obtained by calculating based on identifications of two or three devices. The calculation method may be, but is not limited to, summation, which is not limited in the present disclosure. The first device may obtain the identifications of the corresponding two or three devices by reversely calculating according to the fifth information, the sixth information, the seventh information, and the eighth information. Alternatively, the identifications of the two or three devices include the identification of the anchor device. The position of the anchor device may be determined according to the identification of the anchor device.

As an implementation, the first device stores a correspondence table between the position(s) of the anchor device and the signal characteristic(s) of the first signal. The first device may determine the position of the anchor device based on the correspondence table and the signal characteristic of the first signal.

As an implementation, the first device stores the position of the anchor device, and the first device may determine the position of the anchor device based on the transmission direction of the received first signal.

The anchor device responses to the second signal to transmit the first signal. In some implementations, the anchor device performs back scattering based on the second signal to transmit the first signal. After the first device determines the position of the anchor device, according to the reception power and/or phase of the first signal and the back scattering communication loss of the anchor device, at least one of the following: a path loss from the anchor device to the first device, and a power of the second signal when the second signal reaches the anchor device (that is, the reception power of the second signal), may be determined. Further, based on the determined information combined with the transmission power of the second signal, at least one of the following: a path loss from the second device to the first device via the anchor device, and a path loss from the second device to the anchor device, may be determined. The position of the second device may be determined based on the determined path loss and the position of the anchor device.

The anchor device responses to the second signal to transmit the first signal. In some implementations, the anchor device performs back scattering on the third-party signal provided by the third-party device to transmit the first signal. The anchor device carries the reception power of the second signal in the first signal, that is, the power of the second signal when the second signal reaches the anchor device and/or the transmission power of the first signal (are) is carried in the back scattering signal (the transmission power of the first signal is determined based on the transmission power of the third-party device and the back scattering communication loss of the anchor device). After the first device receives the first signal and determines the position of the anchor device, the path loss from the anchor device to the first device may be determined according to the reception power and/or phase of the first signal and the transmission power of the first signal. According to the reception power of the second signal carried by the first signal and the transmission power of the second signal, at least one of the following: a path loss of the second device to the first device via the anchor device, and a path loss of the second device to the anchor device, may be obtained. The position of the second device may be determined based on the determined path loss and the position of the anchor device.

Mode A-2) The first device receives the second signal transmitted by the second device. The first device positions the second device based on the received first signal and the received second signal.

In some embodiments, the first device determines the position of the anchor device corresponding to the first signal based on the received first signal. The first device determines the position of the second device based on the position of the anchor device and at least one of the following information: a transmission power of the second signal, a reception power of the second signal, a phase of the second signal, a reception power of the first signal, a transmission power of the first signal, a phase of the first signal, and a back scattering communication loss of the anchor device.

It should be noted that the reception power of the second signal may be a power of the second signal when the anchor device receives the second signal (which may be referred to as the first reception power of the second signal), and/or a power of the second signal when the first device receives the second signal (which may be referred to as the second reception power of the second signal). The reception power of the first signal refers to the power of the first signal when the first device receives the first signal.

Here, the transmission power of the second signal may be preset or scheduled by the first device to the second device, and the first device may naturally be aware of the transmission power of the second signal. Alternatively, information indicating the transmission power of the second signal is carried in the second signal, and the information may be carried in the second signal through the transmitting end of the second signal. On the one hand, after receiving the second signal, the anchor device modulates/loads the information in the back scattering signal (that is, the first signal). The transmission power of the second signal may be determined by the first device according to the information carried by the back scattering signal after receiving the back scattering signal (that is, the first signal). On the other hand, the first device may directly receive the second signal, so that the transmission power of the second signal may be determined according to the information carried by the second signal.

Here, information indicating the first reception power (the first reception power is the power of the second signal when the second signal reaches the anchor device) and/or the phase of the second signal may be carried in the first signal, and the information is carried in the first signal through the anchor device. The first reception power and/or the phase of the second signal may be determined by the first device after receiving the first signal.

Here, the first device may directly receive the second signal. The second reception power (the second reception power is the power of the second signal when the second signal reaches the first device) and/or the phase of the second signal may be determined by the first device after receiving the second signal.

Here, the reception power and/or phase of the first signal may be determined by the first device after receiving the first signal.

Here, in some embodiments, the anchor device performs back scattering on the second signal to transmit the first signal. In this case, the transmission power of the first signal is uncovered to the anchor device, and the transmission power of the first signal may be determined by the first device according to the position of the anchor device and the reception power and/or phase of the first signal. In some embodiments, the anchor device performs back scattering on the third-party signal to transmit the first signal. In this case, the transmission power of the first signal is determined based on the transmission power of the third-party signal, the transmission power of the first signal is known to the anchor device, the anchor device carries information indicating the transmission power of the first signal in the first signal, and the transmission power of the first signal may be determined by the first device after receiving the first signal.

Here, the back scattering communication loss of the anchor device may be preset in the first device or may also be reported to the first device by the anchor device.

Here, the first device determines the position of the anchor device corresponding to the first signal based on the signal characteristic of the received first signal. In some embodiments, the signal characteristic of the first signal includes at least one of: characteristic of information carried by the first signal, characteristic of a transmission direction of the first signal, and characteristic of a transmission resource of the first signal. The first signal carries at least one of the following information: an identification of the anchor device, an identification of the second device, an identification of the first device, fifth information, sixth information, seventh information, and eighth information. The fifth information is obtained by calculating based on the identification of the anchor device and the identification of the second device. The sixth information is obtained by calculating based on the identification of the anchor device and the identification of the first device. The seventh information is obtained by calculating based on the identification of the second device and the identification of the first device. The eighth information is obtained by calculating based on the identification of the anchor device, the identification of the second device, and the identification of the first device.

The anchor device responses to the second signal to transmit the first signal. In some implementations, the anchor device performs back scattering based on the second signal to transmit the first signal. After the first device determines the position of the anchor device, according to the reception power and/or phase of the first signal and the back scattering communication loss of the anchor device, at least one of the following may be determined: a path loss from the anchor device to the first device, and a power of the second signal when the second signal reaches the anchor device (that is, the first reception power of the second signal). Further, based on the determined information combined with the transmission power of the second signal, and the power of the second signal when the second signal reaches the first device (that is, the second reception power of the second signal), at least one of the following may be determined: a path loss from the second device to the first device via the anchor device, a path loss from the second device to the first device, and a path loss from the second device to the anchor device. The position of the second device may be determined based on the determined path loss and the position of the anchor device.

The anchor device responses to the second signal to transmit the first signal. In some implementations, the anchor device performs back scattering on the third-party signal provided by the third-party device to transmit the first signal. The anchor device carries the power of the second signal when the second signal reaches the anchor device and/or the transmission power of the first signal (the transmission power of the first signal is determined based on the transmission power of the third-party device and the back scattering communication loss of the anchor device) in the first signal. After the first device receives the first signal and determines the position of the anchor device, the path loss from the anchor device to the first device may be determined according to the reception power and/or phase of the first signal and the transmission power of the first signal. According to the power of the second signal when the second signal reaches the anchor device carried by the first signal, the transmission power of the second signal, and the power of the second signal when the second signal reaches the first device, at least one of the following: a path loss of the second device to the first device via the anchor device, a path loss of the second device to the first device, or a path loss of the second device to the anchor device, may be determined. The position of the second device may be determined based on the determined path loss and the position of the anchor device.

### Solution B

In some embodiments, the second signal is a signal transmitted by the first device.

As an implementation, the second signal is the first control signal transmitted by the first device. The first control signal is used for scheduling the anchor device to perform back scattering communication.

As an implementation, the second signal is a signal different from the first control signal transmitted by the first device.

The first device transmits the second signal, and the anchor device responds to the received second signal to transmit the first signal. The first device receives the first signal transmitted by the anchor device. In some implementations, after receiving the second signal, the anchor device performs back scattering on the second signal to transmit the first signal. In another implementation, after receiving the second signal, the anchor device performs back scattering on the third-party signal provided by the third-party device to transmit the first signal.

In the above solution B, for positioning the second device by the first device based on the received first signal, the following implementations may be used.

Mode B-1) The first device receives the third signal transmitted by the second device. The first device positions the second device based on the received first signal and the received third signal.

In some embodiments, the first device determines a position of an anchor device corresponding to the first signal based on the received first signal.

The first device determines the position of the second device based on the position of the anchor device and at least one of the following information: a transmission power of the third signal, a reception power of the third signal, a phase of the third signal, a reception power of the first signal, a transmission power of the first signal, a phase of the first signal, and back scattering communication loss of the anchor device.

Here, the reception power of the third signal refers to the power of the third signal when the first device receives the third signal. The reception power of the first signal refers to the power of the first signal when the first device receives the first signal.

Here, the transmission power of the third signal may be preset or scheduled by the first device to the second device, and the first device may naturally be aware of the transmission power of the third signal. Optionally, information indicating the transmission power of the third signal is carried in the third signal, and the information may be carried in the third signal through the transmitting end of the third signal. The transmission power of the third signal may be determined by the first device after receiving the third signal.

Here, the reception power and/or phase of the third signal may be determined by the first device after receiving the third signal.

Here, the reception power and/or phase of the first signal may be determined by the first device after receiving the first signal.

Here, in some embodiments, the anchor device performs back scattering on the second signal to transmit the first signal. In this case, the transmission power of the first signal is uncovered to the anchor device, and the transmission power of the first signal may be determined by the first device according to the position of the anchor device and the reception power and/or phase of the first signal. In some embodiments, the anchor device performs back scattering on the third-party signal to transmit the first signal. In this case, the transmission power of the first signal is determined based on the transmission power of the third-party signal, the transmission power of the first signal is known to the anchor device, the anchor device carries information indicating the transmission power of the first signal in the first signal, and the transmission power of the first signal may be determined by the first device after receiving the first signal.

Here, the back scattering communication loss of the anchor device may be preset in the first device or may also be reported to the first device by the anchor device.

Here, the first device determines the position of the anchor device corresponding to the first signal based on the signal characteristic of the received first signal. In some embodiments, the signal characteristic of the first signal includes at least one of: characteristic of information carried by the first signal, characteristic of a transmission direction of the first signal, and characteristic of a transmission resource of the first signal. The first signal carries at least one of the following information: an identification of the anchor device, an identification of the second device, an identification of the first device, fifth information, sixth information, seventh information, and eighth information. The fifth information is obtained by calculating based on the identification of the anchor device and the identification of the second device. The sixth information is obtained by calculating based on the identification of the anchor device and the identification of the first device. The seventh information is obtained by calculating based on the identification of the second device and the identification of the first device. The eighth information is obtained by calculating based on the identification of the anchor device, the identification of the second device, and the identification of the first device.

The anchor device responses to the second signal to transmit the first signal. In some implementations, the anchor device performs back scattering based on the second signal to transmit the first signal. After the first device determines the position of the anchor device, the path loss from the anchor device to the first device may be determined according to the reception power of the first signal and the transmission power of the first signal. The path loss from the second device to the first device may be determined according to the reception power of the third signal and the transmission power of the third signal. Further, the position of the second device may be determined according to information such as phases and/or angles of the first signal and the third signal, the position of the anchor device and the determined path loss. As an example, the first device determines which anchor device is close to the path loss from the second device to the first device according to the power spectrum map, so that the position of the second device may be approximately determined.

The anchor device responses to the second signal to transmit the first signal. In some implementations, the anchor device performs back scattering on the third-party signal provided by the third-party device to transmit the first signal. The anchor device carries the transmission power of the first signal in the first signal (the transmission power of the first signal is determined based on the transmission power of the third-party device and the back scattering communication loss of the anchor device). After the first device receives the first signal and determines the position of the anchor device, the path loss from the anchor device to the first device may be determined according to the reception power of the first signal and the transmission power of the first signal. The path loss from the second device to the first device may be determined according to the reception power of the third signal and the transmission power of the third signal. Further, the position of the second device may be determined according to information such as phases and/or angles of the first signal and the third signal, the position of the anchor device and the determined path loss.

Here, the third signal is a signal transmitted by the second device based on the scheduling of the third control signal. The first device transmits the third control signal to the second device, and the third control signal is used for scheduling the second device to transmit the third signal.

In some embodiments, the third control signal includes at least one of third information and the fourth information.

The third information is used for instructing the second device to transmit the third signal at a specified time.

The fourth information is used for instructing the second device to transmit the third signal having a specified signal characteristic. The specified signal characteristic includes at least one of the following: the signal carrying specified information, the signal being transmitted through a specified transmission resource, and the strength of the signal satisfying a specified strength range. Optionally, the transmission resource includes at least one of a time domain resource, a frequency domain resource, and a code domain resource.

For the above solutions, the first solution may be implemented in combination with any one of the solution A or solution B to form different solutions, and the second solution may be implemented in combination with any one of the solution A or solution B to form different solutions.

In the technical solutions of the embodiments of the present disclosure, it is considered that the zero-power device has the following advantages: a simple structure, low complexity, and low cost, and supporting back scattering communication, and large-scale and high-density deployment is expected. The large-scale and high-density deployment of zero-power devices can support more accurate positioning, especially in some indoor environments, which can greatly improve the accuracy of positioning.

Hereinafter, the technical solutions of the embodiments of the present disclosure will be illustrated in combination with specific application examples. The technical solutions of the embodiments of the present disclosure are not limited to the following application examples, and more application examples implemented based on the above solutions belong to the scope of protection of the present disclosure.

### First application example

This application example corresponds to a combination of the first solution and the solution A in the above solutions. This application example adopts solutions related to option 1) and mode A-2) in the solution A.

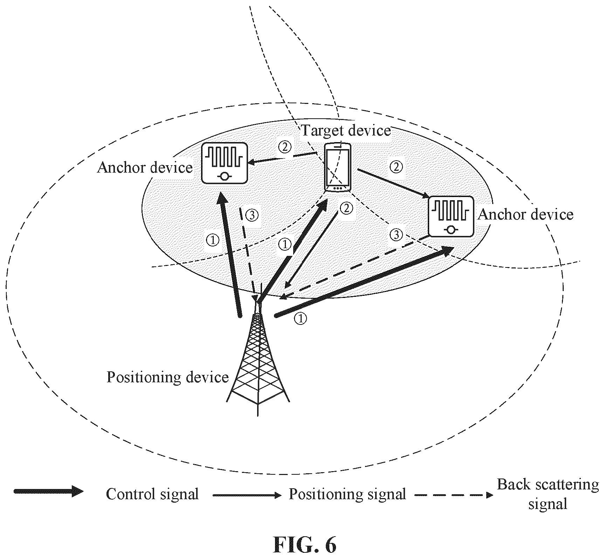

FIG. 6 is a schematic diagram of a positioning system. As illustrated in FIG. 6, the positioning system includes a positioning device (i.e., the first device), a target device (i.e., the second device), and two anchor devices. Here, the positioning device being a network device (such as a base station), the target device being a terminal (such as a mobile phone), and the anchor devices being electronic tags, are taken as an example. In the FIG. 6, the positioning system including two anchor devices is taken as an example, but the present disclosure is not limited to this, and there may be other number of anchor devices, such as 1, 3, 4, tens, hundreds, etc. The anchor devices support back scattering communication and may be, for example, zero-power devices. (1) The positioning device transmits the first control signal to the anchor devices respectively. The first control signal is used for scheduling the anchor devices to perform back scattering communication. The positioning device transmits the second control signal to the target device. The second control signal is used for scheduling the second device to transmit the positioning signal (i.e., the second signal). The first control signal and the second control signal may be the same signal or different signals. The first control signal and the second control signal are collectively referred to as control signals in FIG. 6. (2) The target device transmits the positioning signal (i.e., the second signal) based on the scheduling of the second control signal. The second signal may be transmitted by the target device to the positioning device and may be received by two anchor devices near the target device at the same time. (3) The two anchor devices perform back scattering on the received positioning signal to transmit the back scattering signals (i.e., the first signals). The positioning device receives the back scattering signals transmitted by the two anchor devices. Thereafter, the positioning device positions the target device based on the received back scattering signals transmitted by the anchor devices and the positioning signal transmitted by the target device.

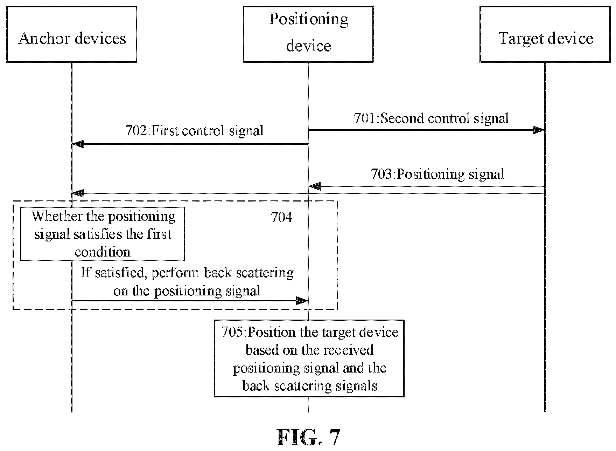

FIG. 7 is a flowchart for positioning performed by the positioning system illustrated in FIG. 6. As illustrated in FIG. 7, when the positioning device needs to position the target device, the target device may be positioned based on the positioning signal transmitted by the target device and the back scattering signals transmitted by the anchor devices. The anchor devices illustrated in FIG. 7 include two anchor devices illustrated in FIG. 6. The flows illustrated in FIG. 7 include the following operations.

In operation 701, the positioning device transmits the second control signal to the target device. The second control signal is used for scheduling the second device to transmit the positioning signal.

In operation 702, the positioning device transmits the first control signal to the anchor devices assisting in positioning. The first control signal is used for scheduling the anchor devices to perform back scattering communication.

In some embodiments, the first control signal and the second control signal may be carried in same signaling for transmitting. The type of signaling may be broadcast signaling, multicast signaling, or unicast signaling, which is not limited in the present disclosure. If the type of signaling is broadcast signaling, the signaling may be received by all devices. If the type of signaling is multicast signaling, the signaling may be received by devices within a group. The anchor devices and the target device are devices in the group. If the type of signaling is unicast signaling, the signaling may be received by a specific device, and the target device may be the specific device. The anchor devices do not discard the unicast signaling for the target device but, like the target device, receive this signaling. Alternatively, the anchor devices may be the specific devices, and the target device does not discard unicast signaling for the anchor devices but, like the anchor devices, receives this signaling.

In some embodiments, the first control signal and the second control signal may be carried in different signaling for transmitting. The type of signaling may be unicast signaling, which is not limited in the present disclosure. Here, the transmission time of the signaling carrying the second control signal may be earlier than, simultaneous with, or later than the transmission time of the signaling carrying the first control signal.

Here, the second control signal is used for scheduling the second device to transmit the positioning signal, and reference may be made to the above related solution.

Here, the first control signal is used for scheduling the anchor devices to perform back scattering communication, and reference may be made to the above related solution.

In operation 703, the target device transmits the positioning signal based on the scheduling of the second control signal.

Here, the type of the positioning signal may be a certain signal specified in the 3GPP standard, for example, an SRS, a PUSCH, a PRACH, a PUCCH, a PDCCH, a PDSCH, a PBCH, or the like. Alternatively, the positioning signal may be a new signal, which is not limited in the present disclosure. In addition, the positioning signal may be a signal autonomously transmitted by the target device, or may be a signal generated after the target device performing back scattering on another signal. The signal characteristic of the positioning signal needs to be determined based on the scheduling of the second control signal. Here, the reference for the signal characteristic of the positioning signal may be made to the above related solution.

In operation 704, the anchor devices determine whether the received positioning signal satisfies the first condition based on the first control signal, and if the received positioning signal satisfies the first condition, the anchor devices perform back scattering on the received positioning signal.

Here, the reference for the specific implementation of the first condition may be made to the above related solution.

In operation 705, the positioning device positions the target device based on the received positioning signal transmitted by the target device and the back scattering signals transmitted by the anchor devices.

Here, the reference for the specific implementation of positioning for the target device performed by the positioning device may be made to the above related solution.

### Second application example

This application example corresponds to a combination of the second solution and the solution A in the above solutions. This application example adopts solutions related to option 1) and mode A-2) in the solution A.

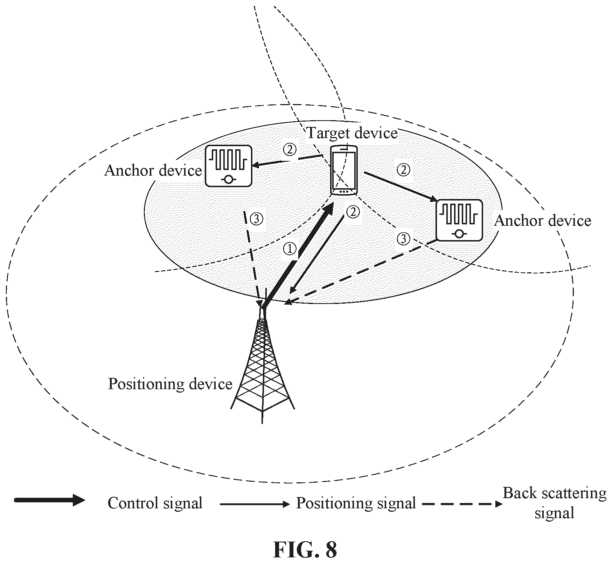

FIG. 8 is a schematic diagram of a positioning system. As illustrated in FIG. 8, the positioning system includes a positioning device (i.e., the first device), a target device (i.e., the second device), and two anchor devices. Here, the positioning device being a network device (such as a base station), the target device being a terminal (such as a mobile phone), and the anchor devices being electronic tags, are taken as an example. In the FIG. 8, the positioning system including two anchor devices is taken as an example, but there the present disclosure is not limited to this, and may be other number of anchor devices, such as 1, 3, 4, tens, hundreds, etc. The anchor devices support back scattering communication and may be, for example, zero-power devices. (1)The positioning device transmits the second control signal to the target device. The second control signal is used for scheduling the second device to transmit the positioning signal (i.e., the second signal). The second control signal is named as a control signal in FIG. 8. (2)The target device transmits the positioning signal (i.e., the second signal) based on the scheduling of the second control signal. The second signal may be transmitted by the target device to the positioning device and may be received by two anchor devices near the target device at the same time. (3)The two anchor devices perform back scattering on the received positioning signal to transmit back scattering signals (i.e., the first signals). The positioning device receives the back scattering signals transmitted by the two anchor devices. Thereafter, the positioning device positions the target device based on the received back scattering signals transmitted by the anchor devices and the positioning signal transmitted by the target device.

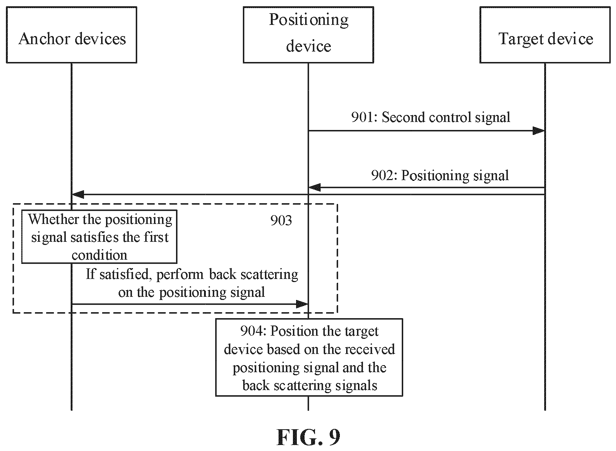

FIG. 9 is a flowchart for positioning performed by the positioning system illustrated in FIG. 8. As illustrated in FIG. 9, when the positioning device needs to position the target device, the target device may be positioned based on the positioning signal transmitted by the target device and the back scattering signals transmitted by the anchor devices. The anchor devices illustrated in FIG. 9 include two anchor devices illustrated in FIG. 8. The flows illustrated in FIG. 9 include the following operations.

In operation 901, the positioning device transmits the second control signal to the target device. The second control signal is used for scheduling the second device to transmit the positioning signal.

Here, the second control signal is used for scheduling the second device to transmit the positioning signal, and reference may be made to the above related solution.

In operation 902, the target device transmits the positioning signal based on the scheduling of the second control signal.

Here, the type of the positioning signal may be a certain signal specified in the 3GPP standard, for example, an SRS, a PUSCH, a PRACH, a PUCCH, a PDCCH, a PDSCH, a PBCH, or the like. Alternatively, the positioning signal may be a new signal, which is not limited in the present disclosure. In addition, the positioning signal may be a signal autonomously transmitted by the target device, or may be a signal generated after the target device performing back scattering on another signal.

The signal characteristic of the positioning signal needs to be determined based on the scheduling of the second control signal. Here, the reference for the signal characteristic of the positioning signal may be made to the above related solution.

In operation 903, the anchor devices determine whether the received positioning signal satisfies the first condition based on the first control signal, and if the received positioning signal satisfies the first condition, the anchor devices perform back scattering on the received positioning signal.

Here, the reference for the specific implementation of the first condition may be made to the above related solution.

In operation 904, the positioning device positions the target device based on the received positioning signal transmitted by the target device and the back scattering signals transmitted by the anchor devices.

Here, the reference for the specific implementation of positioning for the target device performed by the positioning device may be made to the above related solution.

### Third application example

This application example corresponds to a combination of the first solution and the solution B in the above solutions. This application example adopts solutions related to mode B-1) in the solution B.

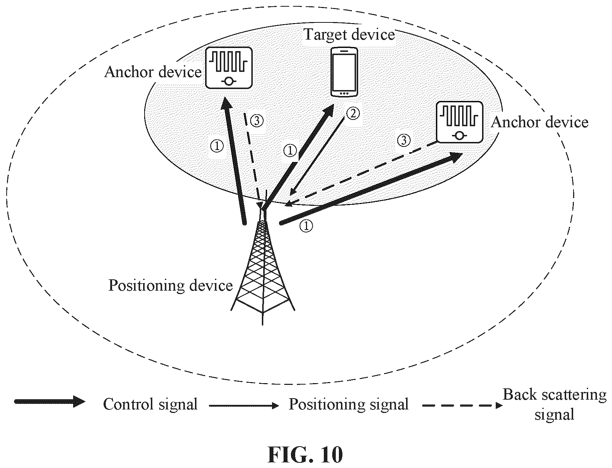

FIG. 10 is a schematic diagram of a positioning system. As illustrated in FIG. 10, the positioning system includes a positioning device (i.e., the first device), a target device (i.e., the second device), and two anchor devices. Here, the positioning device being a network device (such as a base station), the target device being a terminal (such as a mobile phone), and the anchor devices being electronic tags, are taken as an example. In the FIG. 10, the positioning system including two anchor devices is taken as an example, but the present disclosure is not limited to this, and there may be other number of anchor devices, such as 1, 3, 4, tens, hundreds, etc. The anchor devices support back scattering communication and may be, for example, zero-power devices. (1)The positioning device transmits the first control signal to the anchor devices respectively. The first control signal is used for scheduling the anchor devices to perform back scattering communication. The positioning device transmits the second control signal to the target device. The second control signal is used for scheduling the second device to transmit the positioning signal (i.e., the second signal). The first control signal and the second control signal may be the same signal or different signals. The first control signal and the second control signal are collectively referred to as control signals in FIG. 10. (2)The target device transmits the positioning signal (that is, the second signal) based on the scheduling of the second control signal. The second signal may be transmitted by the target device to the positioning device. (3)The two anchor devices perform back scattering on the received first control signal to transmit back scattering signals (i.e., the first signals), and the positioning device receives the back scattering signals transmitted by the two anchor devices. Thereafter, the positioning device positions the target device based on the received back scattering signals transmitted by the anchor devices and the positioning signal transmitted by the target device.

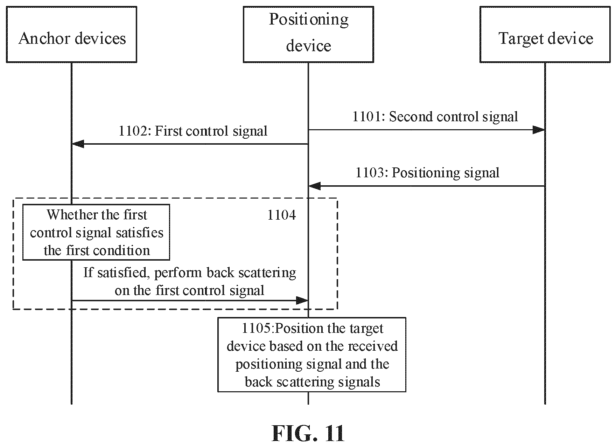

FIG. 11 is a flowchart for positioning performed by the positioning system illustrated in FIG. 10. As illustrated in FIG. 11, when the positioning device needs to position the target device, the target device may be positioned based on the positioning signal transmitted by the target device and the back scattering signals transmitted by the anchor devices. The anchor devices illustrated in FIG. 11 include two anchor devices illustrated in FIG. 10. The flows illustrated in FIG. 11 include the following operations.

In operation 1101, the positioning device transmits the second control signal to the target device. The second control signal is used for scheduling the second device to transmit the positioning signal.

In operation 1102, the positioning device transmits the first control signal to the anchor devices assisting in positioning. The first control signal is used for scheduling the anchor devices to perform back scattering communication.

In some embodiments, the first control signal and the second control signal may be carried in same signaling for transmitting. The type of signaling may be broadcast signaling, multicast signaling, or unicast signaling, which is not limited in the present disclosure. If the type of signaling is broadcast signaling, the signaling may be received by all devices. If the type of signaling is multicast signaling, the signaling may be received by devices within a group. The anchor devices and the target device are devices in the group. If the type of signaling is unicast signaling, the signaling may be received by a specific device, and the target device may be the specific device. The anchor devices do not discard the unicast signaling for the target device but, like the target device, receive this signaling. Alternatively, the anchor devices may be the specific devices, and the target device does not discard unicast signaling for the anchor devices but, like the anchor devices, receives this signaling.

In some embodiments, the first control signal and the second control signal may be carried in different signaling for transmitting. The type of signaling may be unicast signaling, which is not limited in the present disclosure. Here, the transmission time of the signaling carrying the second control signal may be earlier than, simultaneous with, or later than the transmission time of the signaling carrying the first control signal.

Here, the second control signal is used for scheduling the second device to transmit the positioning signal, and reference may be made to the above related solution.

Here, the first control signal is used for scheduling the anchor devices to perform back scattering communication, and reference may be made to the above related solution.

In operation 1103, the target device transmits the positioning signal based on the scheduling of the second control signal.

Here, the type of the positioning signal may be a certain signal specified in the 3GPP standard, for example, an SRS, a PUSCH, a PRACH, a PUCCH, a PDCCH, a PDSCH, a PBCH, or the like. Alternatively, the positioning signal may be a new signal, which is not limited in the present disclosure. In addition, the positioning signal may be a signal autonomously transmitted by the target device, or may be a signal generated after the target device performing back scattering on other signals.

The signal characteristic of the positioning signal needs to be determined based on the scheduling of the second control signal. Here, the reference for the signal characteristic of the positioning signal may be made to the above related solution.

In operation 1104, the anchor devices determine whether the received first control signal satisfies the first condition based on the first control signal, and if the received first control signal satisfies the first condition, the anchor devices perform back scattering on the received first control signal.

Here, the reference for the specific implementation of the first condition may be made to the above related solution.

In operation 1105, the positioning device positions the target device based on the received positioning signal transmitted by the target device and the back scattering signals transmitted by the anchor devices.

Here, the reference for the specific implementation of positioning the target device performed by the positioning device may be made to the above related solution.

It should be noted that the interaction between the anchor devices and the positioning device (i.e., the operations 1102 and 1104), and the interaction between the positioning device and the target device (i.e., the operations 1101 and 1103) may be decoupled or coupled. The interaction between the anchor devices and the positioning device may be earlier than or simultaneous with the interaction between the positioning device and the target device. When the interaction between the anchor devices and the positioning device is earlier than the interaction between the positioning device and the target device, the interaction between the positioning device and the target device needs to be performed within a specific time period after the interaction between the anchor device and the positioning device, so that it may be ensured that the result of the interaction between the anchor devices and the positioning device can be applied for positioning the target device.

### Fourth application example

This application example corresponds to the solution A in the above solutions. This application example adopts solutions related to option 2) and mode A-2) in the solution A.

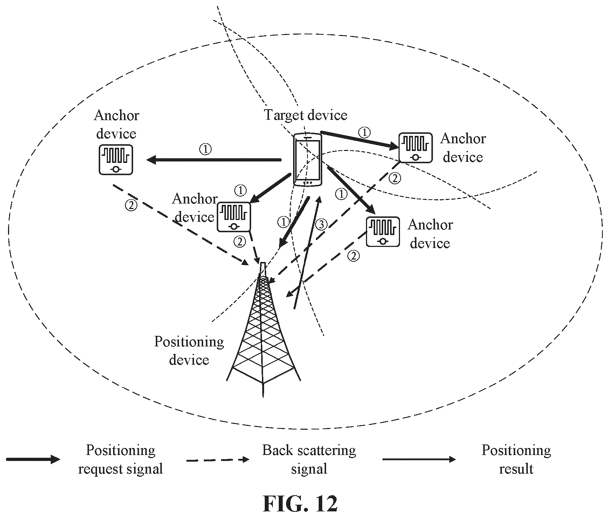

FIG. 12 is a schematic diagram of a positioning system. As illustrated in FIG. 12, the positioning system includes a positioning device (i.e., the first device), a target device (i.e., the second device), and four anchor devices. Here, the positioning device being a network device (such as a base station), the target device being a terminal (such as a mobile phone), and the anchor devices being electronic tags, are taken as an example. In the FIG. 12, the positioning system including four anchor devices is taken as an example, but the present disclosure is not limited to this, and there may be other number of anchor devices. The anchor devices support back scattering communication and may be, for example, zero-power devices. (1)The target device transmits the first positioning request signal to the anchor devices, respectively, and the target device transmits the second positioning request signal to the positioning device. The first positioning request signal and the second positioning request signal may be the same signal or different signals. The first positioning request signal and the second positioning request signal are collectively referred to as positioning request signals in FIG. 12. (2)The four anchor devices perform back scattering on the received first positioning request signal to transmit back scattering signals (i.e. the first signals), and the positioning device receives the back scattering signals transmitted by the four anchor devices. Thereafter, the positioning device positions the target device based on the received back scattering signals transmitted by the anchor devices and the positioning signal transmitted by the target device. (3)The positioning device transmits the positioning result to the target device.

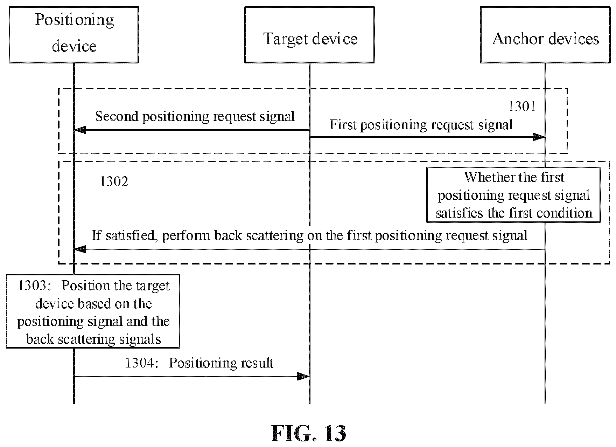

FIG. 13 is a flowchart for positioning performed by the positioning system illustrated in FIG. 12. As illustrated in FIG. 13, when the positioning device needs to position the target device, it may transmit positioning request signals to the positioning device and the anchor devices, and the positioning device positions the target device based on the positioning signal (which may be the second positioning request signal) transmitted by the target device and the back scattering signals transmitted by the anchor devices. The anchor devices illustrated in FIG. 13 include the four anchor devices illustrated in FIG. 12. The flows illustrated in FIG. 13 include the following operations.

In operation 1301, the target device transmits the first positioning request signal to the anchor devices and transmits the second positioning request signal to the positioning device.

Here, the target device wants to acquire its own position. The target device firstly transmits the second positioning request signal to the positioning device to request the positioning device to return its own position. The target device may transmit the first positioning request signal to the anchor devices respectively to request the anchor devices to assist in positioning the target device itself. In some embodiments, the first positioning request signal may serve as incoming signals (i.e., the second signals) of the anchor devices, and the anchor devices perform back scattering on the first positioning request signals. Here, the reference for the signal characteristic of the first positioning request signal may be made to the description of the signal characteristic of the second signal in the above solutions.

In some embodiments, the first positioning request signal and the second positioning request signal may be carried in same signaling for transmitting (or, in other words, the first positioning request signal and the second positioning request signal are the same signal). The type of this signaling may be broadcast signaling, multicast signaling, or unicast signaling, which is not limited in the present disclosure. If the type of signaling is broadcast signaling, the signaling may be received by all devices. If the type of the signaling is multicast signaling, the signaling may be received by devices in a group. The anchor devices and the positioning device are devices in the group. If the type of signaling is unicast signaling, the signaling may be received by the specific device, and the positioning device may be the specific device. The anchor devices do not discard the unicast signaling for the positioning device but, like the positioning device, receive this signaling. Alternatively, the anchor devices may be the specific devices, and the positioning device does not discard the unicast signaling for the anchor device but, like the anchor devices, receives this signaling.

In some embodiments, the first positioning request signal and the second positioning request signal may be carried in different signaling for transmitting (or, in other words, the first positioning request signal and the second positioning request signal are different signals). The type of the signaling may be unicast signaling, which is not limited in the present disclosure. Here, the transmission time of the signaling carrying the second positioning request signal may be earlier than, simultaneous with, or later than the transmission time of the signaling carrying the first positioning request signal.

In operation 1302, the anchor devices determine whether the received first positioning request signal satisfies the first condition, and if the received first positioning request signal satisfies the first condition, the anchor devices perform back scattering on the received first positioning request signal.

Here, the reference for the specific implementation of the first condition may be made to the above related solution.

In operation 1303, the positioning device positions the target device based on the received positioning signal transmitted by the target device and the back scattering signals transmitted by the anchor devices.

Here, the reference for the specific implementation of positioning for the target device performed by the positioning device may be made to the above related solution.

In operation 1304, the positioning device returns the positioning result of the target device to the target device.

The present application example may be implemented in combination with the first solution or the second solution in the above solutions.

According to the technical solutions of the embodiments of the present disclosure, the first device may position the second device based on the assistance of the anchor device(s). Even if there are multiple devices in the positioning system, it may be achieved through scheduling of the anchor device(s) by the first device that the anchor device performs back scattering only on signal satisfying the first condition, thereby achieving positioning the second device accurately and avoiding interference caused by signals of other devices. Alternatively, the anchor device(s) may perform back scattering on the signal satisfying the first condition through predefined information instead of on the basis of the scheduling of the first device, thereby achieving positioning the second device accurately and avoiding interference caused by signals of other devices. On the other hand, the technical solutions of the embodiments of the present disclosure also support a solution in which the second device requests a position from the first device, so that the first device only positions the second device requesting position, thereby improving the positioning efficiency.

The preferred embodiments of the present disclosure have been described in detail above with reference to the accompanying drawings, but the present disclosure is not limited to the specific details in the above embodiments. Within the scope of the technical concept of the present disclosure, a variety of simple modifications may be made to the technical solutions of the present disclosure, and these simple modifications all belong to the scope of protection of the present disclosure. For example, various specific technical features described in the above detailed embodiments may be combined in any suitable manner without contradiction, and various possible combinations will not be described separately in the present disclosure in order to avoid unnecessary repetition. For another example, various different embodiments of the present disclosure may be combined arbitrarily, and as long as they do not contradict the idea of the present disclosure, they should be regarded as the disclosure of the present disclosure as well. For another example, on the premise that there is no conflict, various embodiments described in the present disclosure and/or the technical features in various embodiments may be arbitrarily combined with the prior art, and the technical solutions obtained after the combination should also fall within the scope of protection of the present disclosure.

It should also be understood that in various method embodiments of the present disclosure, the size of the sequence numbers of the above processes does not mean the sequence of execution, and the sequence of execution of various processes should be determined by its function and internal logic, and should not constitute any limitation on the implementation of the embodiments of the present disclosure. In addition, in the embodiments of the present disclosure, the terms "downlink", "uplink" and "sidelink" are used to indicate the transmission direction of signals or data. The "downlink" is used to indicate that the transmission direction of signals or data is the first direction transmitted from the station to the UE of the cell. The "uplink" is used to indicate that the transmission direction of signals or data is the second direction transmitted from the UE of the cell to the station. The "sidelink" is used to indicate that the transmission direction of the signal or data is the third direction transmitted from the first UE to the second UE. For example, "downlink signal" indicates that the transmission direction of the signal is the first direction. In addition, in the embodiments of the present disclosure, the term "and/or" is used for describing a kind of association relationship of association objects, which indicates that there may be three kinds of relationships. Specifically, A and/or B may indicate the following three cases: A exists alone, A and B both exist, and B exists alone. In addition, the character "/" in the present disclosure generally indicates that there is an "or" relationship between the association objects.

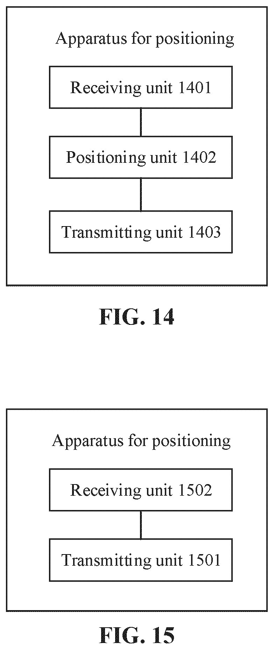

FIG. 14 is the first schematic diagram of a structural composition of an apparatus for positioning provided by an embodiment of the present disclosure. The apparatus is applied to the first device. As illustrated in FIG. 14, the apparatus for positioning includes a receiving unit 1401and a positioning unit 1402.

The receiving unit 1401 is configured to receive the first signal transmitted by an anchor device. The first signal is a back scattering signal corresponding to the second signal received by the anchor device.

The positioning unit 1402 is configured to position the second device based on the received first signal.

In some embodiments, the second signal is a signal satisfying the first condition. The first condition is a condition related to positioning of the second device.

In some embodiments, the first condition is determined based on the first control signal transmitted by the first device. Optionally, the first condition is determined based on predefined information.

In some embodiments, the apparatus further includes a transmitting unit 1403. When the first condition is determined based on the first control signal transmitted by the first device, the transmitting unit 1403 is configured to transmit the first control signal to the anchor device. The first control signal is configured to schedule the anchor device to perform back scattering communication and/or the first control signal is configured to indicate the first condition.

In some embodiments, the first condition includes at least one of the first sub-condition and the second sub-condition.

The first sub-condition is that reception time of the signal is at a specified time window.

The second sub-condition is that the signal has a specified signal characteristic.

In some embodiments, the second signal is a signal transmitted by the second device.

In some embodiments, the second signal is a signal transmitted by the second device based on a scheduling of the second control signal. Alternatively, the second signal is a signal autonomously transmitted by the second device.

In some embodiments, when the second signal is a signal transmitted by the second device based on the scheduling of the second control signal, the transmitting unit 1403 is configured to transmit the second control signal to the second device. The second control signal is configured to schedule the second device to transmit the second signal.

In some embodiments, the second control signal includes at least one of first information and second information.

The first information is configured to instruct the second device to transmit the second signal at a specified time.

The second information is configured to instruct the second device to transmit the second signal having a specified signal characteristic.

In some embodiments, when the second signal is the signal autonomously transmitted by the second device, the second signal is the first positioning request signal configured to request to acquire position information of the second device.

In some embodiments, the second signal is a signal transmitted by the first device.

In some embodiments, the second signal is the first control signal transmitted by the first device, and the first control signal is configured to schedule the anchor device to perform back scattering communication.

In some embodiments, the receiving unit 1401 is configured to receive the second signal transmitted by the second device.

The positioning unit 1402 is configured to position the second device based on the received first signal and the received second signal.

In some embodiments, the positioning unit 1402 is configured to determine a position of the anchor device corresponding to the first signal based on the received first signal, and determine a position of the second device based on the position of the anchor device and at least one of following information: a transmission power of the second signal, a reception power of the second signal, a phase of the second signal, a reception power of the first signal, a transmission power of the first signal, a phase of the first signal, and a back scattering communication loss of the anchor device.

In some embodiments, the receiving unit 1401 is configured to receive the third signal transmitted by the second device.

The positioning unit 1402 is configured to position the second device based on the received first signal and the received third signal.

In some embodiments, the positioning unit 1402 is configured to determine a position of the anchor device corresponding to the first signal based on the received first signal, and determine a position of the second device based on the position of the anchor device and at least one of following information: a transmission power of the third signal, a reception power of the third signal, a phase of the third signal, a reception power of the first signal, a transmission power of the first signal, a phase of the first signal, and a back scattering communication loss of the anchor device.

In some embodiments, the third signal is a signal transmitted by the second device based on a scheduling of the third control signal.

In some embodiments, the transmitting unit 1403 is configured to transmit the third control signal to the second device. The third control signal is configured to schedule the second device to transmit the third signal.

In some embodiments, the third control signal includes at least one of the third information or the fourth information.

The third information is configured to instruct the second device to transmit the third signal at a specified time.

The fourth information is configured to instruct the second device to transmit the third signal having a specified signal characteristic.

In some embodiments, the specified signal characteristic includes at least one of: a signal carrying specified information, a signal being transmitted through a specified transmission resource, and a strength of a signal satisfying a specified strength range.

In some embodiments, the transmission resource includes at least one of: a time domain resource, a frequency domain resource, and a code domain resource.

In some embodiments, the positioning unit 1402 is configured to determine the position of the anchor device corresponding to the first signal based on a signal characteristic of the received first signal.

In some embodiments, the first signal carries at least one of following information: an identification of the anchor device, an identification of the second device, an identification of the first device, fifth information, sixth information, seventh information or eighth information. The fifth information is obtained by calculating based on the identification of the anchor device and the identification of the second device. The sixth information is obtained by calculating based on the identification of the anchor device and the identification of the first device. The seventh information is obtained by calculating based on the identification of the second device and the identification of the first device. The eighth information is obtained by calculating based on the identification of the anchor device, the identification of the second device, and the identification of the first device.

In some embodiments, the transmitting unit 1403 is configured to transmit a positioning result of the second device to the second device.

In some embodiments, the receiving unit 1401 is configured to receive the second positioning request signal transmitted by the second device. The second positioning request signal is configured to request to acquire position information of the second device.

In some embodiments, the first device is a network device and the second device is a terminal. Alternatively, the first device is the first terminal and the second device is the second terminal. Alternatively, the first device is a terminal and the second device is a network device.

Those skilled in the art should understand that the related description of the above apparatus for positioning according to the embodiment of the present disclosure may be understood with reference to the related description of the method for positioning according to the embodiment of the present disclosure.

FIG. 15 is the second schematic diagram of the structural composition of an apparatus for positioning provided by the embodiment of the present disclosure. The apparatus is applied to the second device. As illustrated in FIG. 15, the apparatus for positioning includes a transmitting unit 1501.

The transmitting unit 1501 is configured to transmit the first signal to the first device. The first signal is a back scattering signal corresponding to the second signal received by the anchor device. The first signal is used by the first device to position the second device.

In some embodiments, the second signal is a signal satisfying the first condition. The first condition is a condition related to positioning of the second device.

In some embodiments, the first condition is determined based on the first control signal transmitted by the first device. Alternatively, the first condition is determined based on predefined information.

In some embodiments, the apparatus further includes a receiving unit 1502. When the first condition is determined based on the first control signal transmitted by the first device, the receiving unit 1502 is configured to receive the first control signal transmitted by the first device. The first control signal is configured to schedule the anchor device to perform back scattering communication and/or the first control signal is configured to indicate the first condition.

In some embodiments, the first condition includes at least one of the first sub-condition and the second sub-condition.

The first sub-condition is that reception time of the signal is at a specified time window.

The second sub-condition is that the signal has a specified signal characteristic.

In some embodiments, the second signal is a signal transmitted by the second device.

In some embodiments, the second signal is the signal transmitted by the second device based on a scheduling of the second control signal. Alternatively, the second signal is a signal autonomously transmitted by the second device.

In some embodiments, the second control signal includes at least one of the first information and the second information.

The first information is configured to instruct the second device to transmit the second signal at a specified time.

The second information is configured to instruct the second device to transmit the second signal having a specified signal characteristic.

In some embodiments, when the second signal is the signal autonomously transmitted by the second device, the second signal is the first positioning request signal configured to request to acquire position information of the second device.

In some embodiments, the second signal is a signal transmitted by the first device.

In some embodiments, the second signal is the first control signal transmitted by the first device. The first control signal is configured to schedule the anchor device to perform back scattering communication.

In some embodiments, the specified signal characteristic includes at least one of: the signal carrying specified information, the signal being transmitted through a specified transmission resource, and a strength of the signal satisfying a specified strength range.

In some embodiments, the transmission resource includes at least one of: a time domain resource, a frequency domain resource, and a code domain resource.

In some embodiments, the first signal carries at least one of following information: an identification of the anchor device, an identification of the second device, an identification of the first device, fifth information, sixth information, seventh information, eighth information. The fifth information is obtained by calculating based on the identification of the anchor device and the identification of the second device. The sixth information is obtained by calculating based on the identification of the anchor device and the identification of the first device. The seventh information is obtained by calculating based on the identification of the second device and the identification of the first device. The eighth information is obtained by calculating based on the identification of the anchor device, the identification of the second device, and the identification of the first device.

In some embodiments, the first device is a network device and the second device is a terminal. Alternatively, the first device is the first terminal and the second device is the second terminal. Alternatively, the first device is a terminal and the second device is a network device.

Those skilled in the art should understand that the related description of the above apparatus for positioning according to the embodiment of the present disclosure may be understood with reference to the related description of the method for positioning according to the embodiment of the present disclosure.

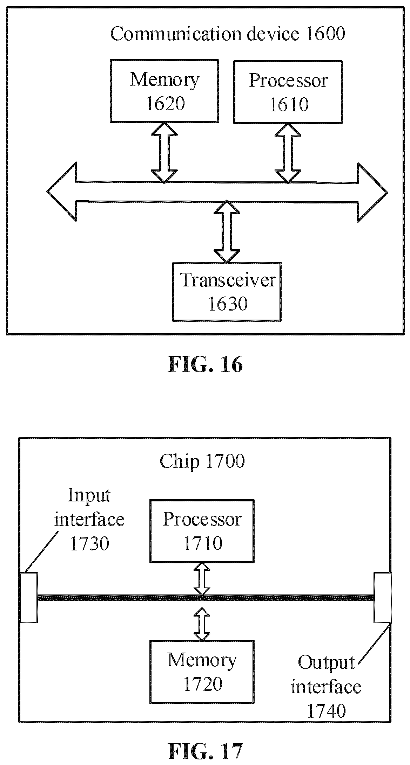

FIG. 16 is a schematic diagram of a structure of a communication device 1600 according to an embodiment of the present disclosure. The communication device may be the first device, the anchor device, or the second device. The communication device 1600 illustrated in FIG. 16 includes a processor 1610. The processor 1610 may invoke and execute a computer program from a memory to implement the method in the embodiments of the present disclosure.

Alternatively, as illustrated in FIG. 16, the communication device 1600 may further include a memory 1620. The processor 1610 may invoke and execute a computer program from the memory 1620 to implement the method in the embodiments of the present disclosure.

The memory 1620 may be a separate device independent of the processor 1610 or may be integrated in the processor 1610.

Alternatively, as illustrated in FIG. 16, the communication device 1600 may further include a transceiver 1630. The processor 1610 may control the transceiver 1630 to communicate with other devices, specifically, may transmit information or data to other devices, or receive information or data transmitted by other devices.

The transceiver 1630 may include a transmitter and a receiver. The transceiver 1630 may further include one or more antennas.

Alternatively, the communication device 1600 may specifically be the first device according to the embodiments of the present disclosure, and the communication device 1600 may implement the corresponding processes implemented by the first device in various methods according to the embodiments of the present disclosure, which will not be described herein for the sake of brevity.

Alternatively, the communication device 1600 may specifically be the anchor device according to the embodiments of the present disclosure, and the communication device 1600 may implement corresponding processes implemented by the anchor device in various methods according to the embodiments of the present disclosure, which will not be described herein for the sake of brevity.

Alternatively, the communication device 1600 may specifically be the second device according to the embodiments of the present disclosure, and the communication device 1600 may implement corresponding processes implemented by the second device in various methods according to the embodiments of the present disclosure, which will not be described herein for the sake of brevity.

FIG. 17 is a schematic diagram of a structure of a chip provided by an embodiment of the present disclosure. The chip 1700 illustrated in FIG. 17 includes a processor 1710. The processor 1710 may invoke and execute a computer program from a memory to implement the method in the embodiments of the present disclosure.

Alternatively, as illustrated in FIG. 17, the chip 1700 may further include a memory 1720. The processor 1710 may invoke and execute a computer program from the memory 1720 to implement the method in the embodiments of the present disclosure.

The memory 1720 may be a separate device independent of the processor 1710 or may be integrated in the processor 1710.

Alternatively, the chip 1700 may further include an input interface 1730. The processor 1710 may control the input interface 1730 to communicate with other devices or chips, specifically, may acquire information or data transmitted by other devices or chips.

Alternatively, the chip 1700 may further include an output interface 1740. The processor 1710 may control the output interface 1740 to communicate with other devices or chips, specifically, may output information or data to other devices or chips.

Alternatively, the chip may be applied to the first device in the embodiments of the present disclosure, and the chip may implement the corresponding processes implemented by the first device in various methods of the embodiments of the present disclosure, which will not be described herein for the sake of brevity.

Alternatively the chip may be applied to the anchor device in the embodiments of the present disclosure, and the chip may implement the corresponding processes implemented by the anchor device in various methods of the embodiments of the present disclosure, which will not be described herein for the sake of brevity.

Alternatively, the chip may be applied to the second device in the embodiments of the present disclosure, and the chip may implement the corresponding processes implemented by the second device in various methods of the embodiments of the present disclosure, which will not be described herein for the sake of brevity.

It should be understood that the chip mentioned in the embodiments of the present disclosure may also be referred to as a system level chip, a system chip, a chip system or a system-on-chip or the like.

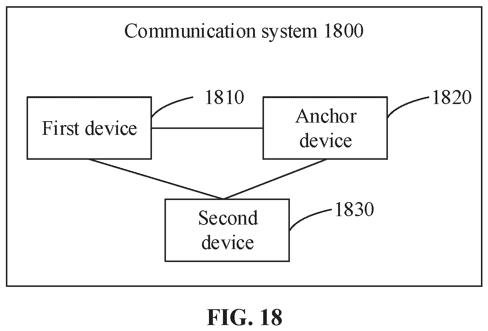

FIG. 18 is a schematic block diagram of a communication system 1800 provided by an embodiment of the present disclosure. As illustrated in FIG. 18, the communication system 1800 includes the first device 1810, an anchor device 1820, and the second device 1830.

The first device 1810 may be configured to implement the corresponding functions implemented by the first device in the above methods, the anchor device 1820 may be configured to implement the corresponding functions implemented by the anchor device in the above methods, and the second device 1830 may be configured to implement the corresponding functions implemented by the second device in the above methods, which will not be described herein for the sake of brevity.

It should be understood that the processor of the embodiments of the present disclosure may be an integrated circuit chip having signal processing capabilities. In the implementation process, the operations of the above method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, operations, and logical block diagrams disclosed in the embodiments of the present disclosure may be implemented or executed. The general-purpose processor may be a microprocessor or the processor may be any conventional processor or the like. The operations of the method disclosed in combination with the embodiments of the present disclosure may be directly embodied as execution by the hardware decoding processor, or may be executed by a combination of hardware and software modules in the decoding processor. The software module may be located in a Random Access Memory (RAM), a flash memory, a Read-Only Memory (ROM), a Programmable ROM (PROM), an electrically erasable PROM (EEPROM), a register and other storage medium mature in the art. The storage medium is located in the memory, and the processor reads the information in the memory and completes the operations of the methods in combination with its hardware.

It is understood that the memory in the embodiments of the present disclosure may be a volatile memory or a non-volatile memory, or may include both volatile and non-volatile memory. The non-volatile memory may be a ROM, a PROM, an Erasable PROM (EPROM), an EEPROM, or a flash memory. The volatile memory may be a RAM, which serves as an external cache. By way of illustration, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) and Direct Rambus RAM (DR RAM). It should be noted that the memory of the systems and methods described herein is intended to include, but is not limited to, these and any other suitable type of memory.

It should be understood that the above memory is exemplary, but not limiting, and, for example, the memory in embodiments of the present disclosure may also be an SRAM, a DRAM, an SDRAM, a DDR SDRAM, an ESDRAM, an SLDRAM, a DR RAM, etc. That is, the memory in embodiments of the present disclosure is intended to include but not limited to these and any other suitable types of memory.

Embodiments of the present disclosure further provide a computer readable storage medium for storing a computer program.

Alternatively, the computer readable storage medium may be applied to the first device in the embodiments of the present disclosure, and the computer program causes the computer to execute the corresponding processes implemented by the first device in various methods of the embodiments of the present disclosure, which will not be described herein for the sake of brevity.

Alternatively, the computer readable storage medium may be applied to the anchor device in the embodiments of the present disclosure, and the computer program causes the computer to execute the corresponding processes implemented by the anchor device in various methods of the embodiments of the present disclosure, which will not be described herein for the sake of brevity.

Alternatively, the computer readable storage medium may be applied to the second device in the embodiments of the present disclosure, and the computer program causes the computer to execute the corresponding processes implemented by the second device in various methods of the embodiments of the present disclosure, which will not be described herein for the sake of brevity.

Embodiments of the present disclosure further provide a computer program product including computer program instructions.

Alternatively, the computer program product may be applied to the first device in the embodiments of the present disclosure, and the computer program instructions cause the computer to execute the corresponding processes implemented by the first device in various methods of the embodiments of the present disclosure, which will not be described herein for the sake of brevity.

Alternatively, the computer program product may be applied to the anchor device in the embodiments of the present disclosure, and the computer program instruction causes the computer to execute the corresponding processes implemented by the anchor device in various methods of the embodiments of the present disclosure, which will not be described herein for the sake of brevity.

Alternatively, the computer program product may be applied to the second device in the embodiments of the present disclosure, and the computer program instruction causes the computer to execute the corresponding processes implemented by the second device in various methods of the embodiments of the present disclosure, which will not be described herein for the sake of brevity.

Embodiments of the present disclosure further provide a computer program.

Alternatively, the computer program may be applied to the first device in the embodiments of the present disclosure, and when the computer program is executed on the computer, the computer executes the corresponding processes implemented by the first device in various methods of the embodiments of the present disclosure, which will not be described herein for the sake of brevity.

Alternatively, the computer program may be applied to the anchor device in the embodiments of the present disclosure, and when the computer program is executed on the computer, the computer executes the corresponding processes implemented by the anchor device in various methods of the embodiments of the present disclosure, which will not be described herein for the sake of brevity.

Alternatively, the computer program may be applied to the second device in the embodiments of the present disclosure, and when the computer program is executed on the computer, the computer executes the corresponding processes implemented by the second device in various methods of the embodiments of the present disclosure, which will not be described herein for the sake of brevity.

Those of ordinary skill in the art will appreciate that the various exemplary units and algorithm steps described in combination with the embodiments disclosed herein may be implemented in electronic hardware or a combination of computer software and electronic hardware. Whether these functions are performed in hardware or software depends on the specific application and design constraints of the technical solutions. Professionals may use different methods for each particular application to implement the described functionality, but such implementation should not be considered outside the scope of the present disclosure.

Those skilled in the art will clearly appreciate that, for convenience and conciseness of description, the specific operating processes of the above described systems, apparatuses and units may refer to the corresponding processes in the aforementioned method embodiments, which will not be described herein for the sake of conciseness.

In several embodiments provided herein, it should be understood that the disclosed systems, apparatuses and methods may be implemented in other ways. For example, the above embodiments of the apparatuses are only schematic, for example, the division of the units is only a logical function division, and in practice, there may be another division mode, for example, multiple units or components may be combined or integrated into another system, or some features may be ignored or not performed. On the other hand, the coupling, direct coupling or communication connection between each other shown or discussed may be indirect coupling or communication connection through some interfaces, apparatus or units, and may be electrical, mechanical or other form.

The units illustrated as separate components may or may not be physically separated, and the components displayed as units may or may not be physical units, i.e., may be located in one place, or may be distributed over multiple network units. Part or all of the units may be selected according to the actual needs to achieve the purpose of the embodiments.

In addition, various functional units in various embodiments of the present disclosure may be integrated in one processing unit, each unit may exist physically alone, or two or more units may be integrated in one unit.

When implemented in the form of software functional units, and sold or used as stand-alone products, the functions may be stored in a computer readable storage medium. With this understanding, the technical solution of the present disclosure in essence or in part contributing to the prior art may be embodied in the form of a software product. The computer software product is stored in a storage medium, and includes instructions for causing a computer device (which may be a personal computer, a server, a network device, etc.) to perform all or part of the steps of the methods described in various embodiments of the present disclosure. The above storage medium includes a U disk, a removable hard disk, a ROM, a RAM, a magnetic disk or an optical disk and other medium capable of storing program codes.

The above is only the specific embodiments of the present disclosure, but the scope of protection of the present disclosure is not limited thereto. Any technical person familiar with the technical field can easily think of changes or substitutions within the technical scope disclosed in the present disclosure, which should be covered within the scope of protection of the present disclosure. Therefore, the scope of protection of the present disclosure shall be subject to the scope of protection of the claims.

## Claims

1. A method for positioning, comprising:
receiving, by a first device, a first signal transmitted by an anchor device, wherein the first signal is a back scattering signal corresponding to a second signal received by the anchor device; and
positioning, by the first device, a second device based on the received first signal.

2. The method of claim 1, wherein the second signal is a signal satisfying a first condition, and the first condition is a condition related to positioning of the second device.

3. The method of claim 2, wherein,
the first condition is determined based on a first control signal transmitted by the first device; or
the first condition is determined based on predefined information.

4. The method of claim 3, wherein when the first condition is determined based on the first control signal transmitted by the first device, the method further comprises:
transmitting, by the first device, the first control signal to the anchor device, wherein the first control signal is configured to schedule the anchor device to perform back scattering communication and/or the first control signal is configured to indicate the first condition.

5. The method of claim 3 or 4, wherein the first condition comprises at least one of following:
a first sub-condition, which is that reception time of the signal is at a specified time window; or
a second sub-condition, which is that the signal has a specified signal characteristic.

6. The method of any one of claims 1 to 5, wherein the second signal is a signal transmitted by the second device.

7. The method of claim 6, wherein,
the second signal is the signal transmitted by the second device based on a scheduling of a second control signal; or
the second signal is a signal autonomously transmitted by the second device.

8. The method of claim 7, further comprising when the second signal is the signal transmitted by the second device based on the scheduling of the second control signal:
transmitting, by the first device, the second control signal to the second device, wherein the second control signal is configured to schedule the second device to transmit the second signal.

9. The method of claim 7 or 8, wherein the second control signal comprises at least one of following:
first information, which is configured to instruct the second device to transmit the second signal at a specified time; or
second information, which is configured to instruct the second device to transmit the second signal having a specified signal characteristic.

10. The method of claim 7, wherein when the second signal is the signal autonomously transmitted by the second device, the second signal is a first positioning request signal configured to request to acquire position information of the second device.

11. The method of any one of claims 1 to 5, wherein the second signal is a signal transmitted by the first device.

12. The method of claim 11, wherein the second signal is a first control signal transmitted by the first device, and the first control signal is configured to schedule the anchor device to perform back scattering communication.

13. The method of any one of claims 1 to 10, further comprising:
receiving, by the first device, the second signal transmitted by the second device;
wherein positioning, by the first device, the second device based on the received first signal comprises:
positioning, by the first device, the second device based on the received first signal and the received second signal.

14. The method of any one of claims 1 to 10 and 13, wherein positioning, by the first device, the second device based on the received first signal comprises:
determining, by the first device, a position of the anchor device corresponding to the first signal based on the received first signal; and
determining, by the first device, a position of the second device based on the position of the anchor device and at least one of following information:
a transmission power of the second signal;
a reception power of the second signal;
a phase of the second signal;
a reception power of the first signal;
a transmission power of the first signal;
a phase of the first signal; or
a back scattering communication loss of the anchor device.

15. The method of any one of claims 1 to 5, 11 and 12, further comprising:
receiving, by the first device, a third signal transmitted by the second device;
wherein positioning, by the first device, the second device based on the received first signal comprises:
positioning, by the first device, the second device based on the received first signal and the received third signal.

16. The method of any one of claims 1 to 5, 11, 12 and 15, wherein positioning, by the first device, the second device based on the received first signal comprises:
determining, by the first device, a position of the anchor device corresponding to the first signal based on the received first signal; and
determining, by the first device, a position of the second device based on the position of the anchor device and at least one of following information:
a transmission power of the third signal;
a reception power of the third signal;
a phase of the third signal;
a reception power of the first signal;
a transmission power of the first signal;
a phase of the first signal; or
a back scattering communication loss of the anchor device.

17. The method of claim 15 or 16, wherein the third signal is a signal transmitted by the second device based on a scheduling of a third control signal.

18. The method of any one of claims 15 to 17, further comprising:
transmitting, by the first device, a third control signal to the second device, wherein the third control signal is configured to schedule the second device to transmit the third signal.

19. The method of claim 17 or 18, wherein the third control signal comprises at least one of following:
third information, which is configured to instruct the second device to transmit the third signal at a specified time; or
fourth information, which is configured to instruct the second device to transmit the third signal having a specified signal characteristic.

20. The method of any one of claims 5, 9 and 19, wherein the specified signal characteristic comprises at least one of: a signal carrying specified information, a signal being transmitted through a specified transmission resource, or a strength of a signal satisfying a specified strength range.

21. The method of claim 20, wherein the transmission resource comprises at least one of: a time domain resource, a frequency domain resource, or a code domain resource.

22. The method of claim 14 or 16, wherein determining, by the first device, the position of the anchor device corresponding to the first signal based on the received first signal comprises:
determining, by the first device, the position of the anchor device corresponding to the first signal based on a signal characteristic of the received first signal.

23. The method of any one of claims 1 to 22, wherein the first signal carries at least one of following information:
an identification of the anchor device, an identification of the second device, an identification of the first device, fifth information, sixth information, seventh information, or eighth information, wherein the fifth information is obtained by calculating based on the identification of the anchor device and the identification of the second device, the sixth information is obtained by calculating based on the identification of the anchor device and the identification of the first device, the seventh information is obtained by calculating based on the identification of the second device and the identification of the first device, and the eighth information is obtained by calculating based on the identification of the anchor device, the identification of the second device, and the identification of the first device.

24. The method of any one of claims 1 to 23, further comprising after positioning, by the first device, the second device based on the received first signal:
transmitting, by the first device, a positioning result of the second device to the second device.

25. The method of any one of claims 1 to 24, further comprising before positioning, by the first device, the second device based on the received first signal:
receiving, by the first device, a second positioning request signal transmitted by the second device, wherein the second positioning request signal is configured to request to acquire position information of the second device.

26. The method of any one of claims 1 to 25, wherein,
the first device is a network device, and the second device is a terminal; or
the first device is a first terminal, and the second device is a second terminal; or
the first device is a terminal, and the second device is a network device.

27. A method for positioning, comprising:
transmitting, by an anchor device, a first signal to a first device, wherein the first signal is a back scattering signal corresponding to a second signal received by the anchor device, and the first signal is used by the first device to position a second device.

28. The method of claim 27, wherein the second signal is a signal satisfying a first condition, and the first condition is a condition related to positioning of the second device.

29. The method of claim 28, wherein,
the first condition is determined based on a first control signal transmitted by the first device; or
the first condition is determined based on predefined information.

30. The method of claim 29, further comprising when the first condition is determined based on the first control signal transmitted by the first device:
receiving, by the anchor device, a first control signal transmitted by the first device, wherein the first control signal is configured to schedule the anchor device to perform back scattering communication and/or the first control signal is configured to indicate the first condition.

31. The method of claim 29 or 30, wherein the first condition comprises at least one of:
a first sub-condition, which is that reception time of the signal is at a specified time window; or
a second sub-condition, which is that the signal has a specified signal characteristic.

32. The method of any one of claims 27 to 31, wherein the second signal is a signal transmitted by the second device.

33. The method of claim 32, wherein,
the second signal is the signal transmitted by the second device based on a scheduling of a second control signal; or
the second signal is a signal autonomously transmitted by the second device.

34. The method of claim 33, wherein the second control signal comprises at least one of following:
first information, which is configured to instruct the second device to transmit the second signal at a specified time; or
second information, which is configured to instruct the second device to transmit the second signal having a specified signal characteristic.

35. The method of claim 33, wherein when the second signal is the signal autonomously transmitted by the second device, the second signal is a first positioning request signal configured to request to acquire position information of the second device.

36. The method of any one of claims 27 to 31, wherein the second signal is a signal transmitted by the first device.

37. The method of claim 36, wherein the second signal is a first control signal transmitted by the first device, and the first control signal is configured to schedule the anchor device to perform back scattering communication.

38. The method of claim 31 or 34, wherein the specified signal characteristic comprises at least one of: a signal carrying specified information, a signal being transmitted through a specified transmission resource, or a strength of a signal satisfying a specified strength range.

39. The method of claim 38, wherein the transmission resource comprises at least one of: a time domain resource, a frequency domain resource, or a code domain resource.

40. The method of any one of claims 27 to 39, wherein the first signal carries at least one of following information:
an identification of the anchor device, an identification of the second device, an identification of the first device, fifth information, sixth information, seventh information, or eighth information, wherein the fifth information is obtained by calculating based on the identification of the anchor device and the identification of the second device, the sixth information is obtained by calculating based on the identification of the anchor device and the identification of the first device, the seventh information is obtained by calculating based on the identification of the second device and the identification of the first device, and the eighth information is obtained by calculating based on the identification of the anchor device, the identification of the second device, and the identification of the first device.

41. The method of any one of claims 27 to 40, wherein,
the first device is a network device, and the second device is a terminal; or
the first device is a first terminal, and the second device is a second terminal; or
the first device is a terminal, and the second device is a network device.

42. An apparatus for positioning, applicable for a first device, comprising:
a receiving unit, configured to receive a first signal transmitted by an anchor device, wherein the first signal is a back scattering signal corresponding to a second signal received by the anchor device; and
a positioning unit, configured to position a second device based on the received first signal.

43. An apparatus for positioning, applicable for an anchor device, comprising:
a transmitting unit, configured to transmit a first signal to a first device, wherein the first signal is a back scattering signal corresponding to a second signal received by the anchor device, and the first signal is used by the first device to position a second device.

44. A communication device, comprising a processor and a memory, wherein the memory is configured to store a computer program, and the processor is configured to invoke and execute the computer program stored in the memory to perform the method of any one of claims 1 to 26, or to perform the method of any one of claims 27 to 41.

45. A chip, comprising a processor configured to invoke and execute a computer program from a memory to cause a device on which the chip is mounted to perform the method of any one of claims 1 to 26, or to perform the method of any one of claims 27 to 41.

46. A computer readable storage medium, for storing a computer program that causes a computer to perform the method of any one of claims 1 to 26, or to perform the method of any one of claims 27 to 41.

47. A computer program product, comprising computer program instructions that cause a computer to perform the method of any one of claims 1 to 26, or to perform the method of any one of claims 27 to 41.

48. A computer program that causes a computer to perform the method of any one of claims 1 to 26, or to perform the method of any one of claims 27 to 41.
